# EUROPEAN PATENT SPECIFICATION

(11) **EP 3 778 235 B1**
(45) Date of publication and mention of the grant of the patent: **06.12.2023**
(21) Application number: 19784455.8
(22) Date of filing: 13.03.2019
(51) Int. Cl.: B32B 27/36, C08J 7/04, C09D 7/61, C09D 175/04, C09D 175/08, C08G 18/00, C08G 18/08, C08G 18/10, C08G 18/62, C08K 9/10

(54) **LAYERED POLYESTER FILM AND PRODUCTION METHOD THEREFOR**
POLYESTERLAMINATFOLIE UND VERFAHREN ZU IHRER HERSTELLUNG
FILM DE POLYESTER EN COUCHES ET PROCÉDÉ DE PRODUCTION DE CELUI-CI

(30) Priority: 13.04.2018 JP 2018077354
(43) Date of publication of application: 17.02.2021
(73) Proprietor: Toray Industries, Inc., Tokyo 103-8666 (JP)
(72) Inventor: IWAYA, Tadahiko, Otsu-shi, Shiga 520-8558 (JP); OGATA, Masami, Otsu-shi, Shiga 520-8558 (JP); HARADA, Kana, Otsu-shi, Shiga 520-8558 (JP); ABE, Yu, Otsu-shi, Shiga 520-8558 (JP)
(74) Representative: Kador & Partner Part mbB
(86) International application number: PCT/JP2019/010173
(87) International publication number: WO 2019/198406

(56) References cited:
- WO-A1-2016/163554
- JP-A- 2000 214 791
- JP-A- 2009 042 647
- JP-A- 2015 193 756
- JP-A- 2019 038 247
- US-A1- 2008 131 704

## Description

### TECHNICAL FIELD

The present invention relates to a laminated polyester film having a layer (X) on at least one of the polyester films and a method for producing the same.

### BACKGROUND ART

Thermoplastic resin films, especially biaxially stretched polyester films, have excellent properties such as mechanical properties, electrical properties, dimensional stability, transparency, and chemical resistance, thus they have been widely used in many applications such as magnetic recording materials and packaging materials. Particularly in recent years, they have been used for various optical films, including display member applications such as touch panels, liquid crystal display panels (LCD), plasma display panels (PDP), and organic electroluminescence (organic EL).

These optical films are often used as a conductive film by laminating a layer having a different refractive index (hereinafter, an optical adjustment layer) on a polyester film and then providing a conductive layer. Here, in general, when laminating the optical adjustment layer, so-called roll-to-roll processing is applied in which a base material film wound up into a roll is coated with a functional coating agent and cured, then wound up into a roll. Also, the conductive layer is performed by forming an inorganic film on the roll film by sputtering in a vacuum environment.

Therefore, in such applications, a laminated polyester film in which a scratch resistant layer is laminated on a polyester film is used in order to prevent scratches during transport of the film roll.

As this laminated polyester film, a hard coat film on which a layer (hard coat layer) made of an ultraviolet (UV) curable resin is laminated as a scratch resistant layer is used.

On the other hand, the hard coat film may be punched into a predetermined shape and laminated when it is used in a mobile housing, for example. At this time, it is necessary to have workability that allows the scratch resistant layer to be punched out neatly so that cracks do not occur. When the workability is poor, cracks may occur at the ends to impair designability, and fragments may lead to defects.

Moreover, in recent years, there is a growing demand for a film having excellent workability and scratch resistance, since it is required to make devices flexible as represented by organic EL and electronic paper.
Further, in addition to the above optical film for display, a laminated polyester film having scratch resistance is used also for decorative purposes, and adhesion to a metal layer may be required.

In response to such a demand, Patent Document 1 proposes a hard coat forming composition having metal oxide particles and an alkoxysilyl group. Patent Document 2 discloses a laminated thermoplastic resin film having a covering layer containing a copolymerized polyester resin and a polyurethane resin on one side or both sides of a thermoplastic resin film, characterized in that the covering layer has a microphase-separated or nanophase-separated structure in PEs phase A comprising a copolymerized PE resin as a main component and PU phase B comprising a PU resin as a main component. Patent Document 3 relates to a transparent film including a base material and at least one scratch resistant layer of which indentation hardness is 300 MPa or greater and of which a thickness is 50 to 1,000 nm on an outermost surface of the transparent film at one side or both sides of the base material.

### PRIOR ART DOCUMENT

### PATENT DOCUMENT

Patent Document 1: Japanese Patent Laid-open Publication No. 2017-215585
Patent Document 2: US2008/131704 A1
Patent Document 3: WO2016/163554 A1

### SUMMARY OF THE INVENTION

### PROBLEMS TO BE SOLVED BY THE INVENTION

However, a laminated polyester film in which a hard coat layer formed of the hard coat forming composition described in Patent Document 1 is provided on a polyester film has excellent bending property, but punching properties during processing and the effect on metal adhesion are not sufficient. In addition, there is a problem that thermosetting is required for a long time in order to form a hard coat layer.

Therefore, an object of the present invention is to provide a laminated polyester film that eliminates the above defects and has excellent scratch resistance, workability, and metal adhesion.

### SOLUTIONS TO THE PROBLEMS

In order to solve the above problems, the laminated polyester film of the present invention has the following configurations.
(1) A laminated polyester film having a layer (X) on at least one surface of the polyester film, wherein the layer (X) is disposed on at least one surface layer, the layer (X) has a surface having a sea-island structure, the layer (X) has a sea component with an elastic modulus (G2) of 4,000 MPa or less, and a ratio (G1/G2) of an elastic modulus (G1) of an island component and the elastic modulus (G2) of the sea component is 1.5 to 4.0.
(2) The laminated polyester film according to (1), wherein the layer (X) contains metal oxide particles (A) containing at least one metal element selected from the group consisting of Si, Al, Ti, Zr, Se and Fe.
(3) The laminated polyester film according to (2), wherein the content of the metal oxide particles (A) is 15 to 50% by weight based on the entire layer (X).
(4) The laminated polyester film according to (2) or (3), wherein the island component of the layer (X) contains the metal oxide particles (A).
(5) The laminated polyester film according to any one of (1) to (4), wherein a shape of the island component on the surface of the layer (X) has a ratio of the shortest axial length and the longest axial length of 1.5 or more.
(6) The laminated polyester film according to any one of (1) to (5), wherein an area ratio of the island component on the surface of the layer (X) is 10 to 60%.
(7) The laminated polyester film according to any one of (1) to (6), wherein the layer (X) contains a urethane component and an ether component.
(8) The laminated polyester film according to any one of (1) to (7), wherein the layer (X) is a layer formed from a coating agent composition (x) containing the metal oxide particles (A) containing at least one metal element selected from the group consisting of Si, Al, Ti, Zr, Se and Fe and a urethane resin component (B), and a weight ratio ((a)/(b)) of the metal oxide particles (A) and the urethane resin component (B) in the coating agent composition (x) is 30/70 to 70/30.
(9) The laminated polyester film according to (8), wherein the urethane resin component (B) is a urethane resin component (B) having an ether bond.
(10) A method for producing the laminated polyester film according to any one of (1) to (9), including
   applying a coating agent composition (x) to at least one side of the polyester film before crystal orientation is completed and then subjecting the polyester film to a stretching treatment in at least one direction and a heat treatment, wherein the coating agent composition (x) contains metal oxide particles (A) and a urethane resin component (B).

### EFFECTS OF THE INVENTION

The laminated polyester film of the present invention has excellent scratch resistance, workability, and metal adhesion further, and can suppress scratches during film processing and impart workability such as punching.

### BRIEF DESCRIPTION OF THE DRAWINGS

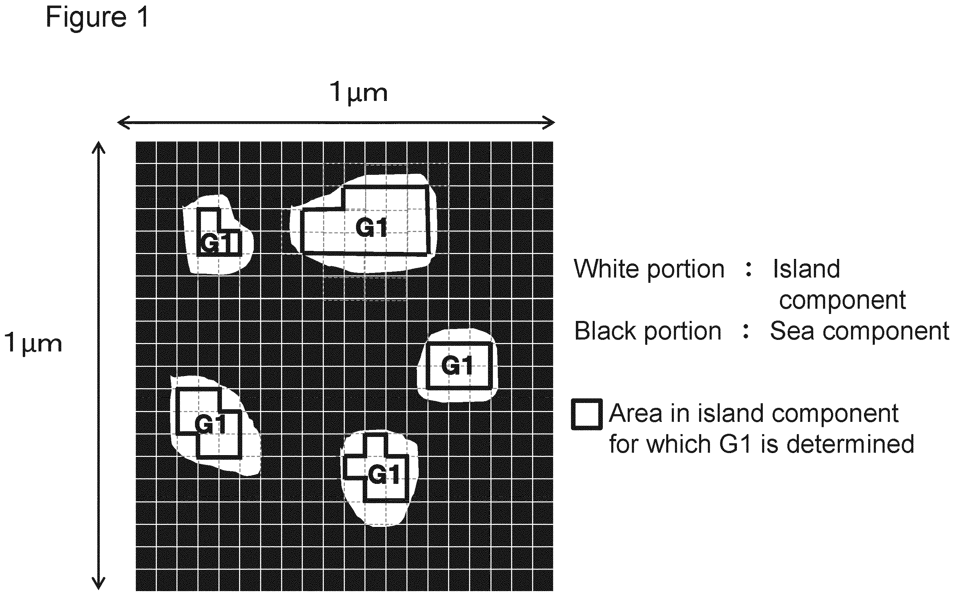

Fig. 1 is a diagram schematically showing a binarized elastic modulus image obtained by Atomic Force Microscope (AFM) measurement of the surface of the layer (X) of the present invention.

### EMBODIMENTS OF THE INVENTION

Hereinafter, the laminated polyester film of the present invention will be described in detail.

The laminated polyester film of the present invention is a laminated polyester film having a layer (X) on at least one surface of the polyester film, in which the layer (X) is disposed on at least one surface layer, the layer (X) has a surface having a sea-island structure, the layer (X) has a sea component with an elastic modulus (G2) of 4,000 MPa or less, and a ratio (G1/G2) of an elastic modulus (G1) of an island component and the elastic modulus (G2) of the sea component is required to be 1.5 to 4.0.

The laminated polyester film of the present invention is required to have a sea-island structure on the surface of the layer (X). The sea-island structure in the present invention indicates that there are a high elastic modulus portion having a high elastic modulus and a low elastic modulus portion having a low elastic modulus on the surface of the layer (X). Whether there is a high elastic modulus portion and a low elastic modulus portion on the surface of the layer (X) is determined by the presence of a black portion and a white portion (black portion is sea component, white portion is island component), when the elastic modulus image obtained by Atomic Force Microscope (AFM) in a measurement method described later is binarized by a method described later.

In order to improve scratch resistance of the laminated polyester film, a method of increasing hardness (increasing elastic modulus) of a hard coat layer has been conventionally known. However, when the hardness of the hard coat layer is increased, the scratch resistance is improved, but cracks are likely to occur (crack resistance is deteriorated) during punching. On the other hand, when the hardness of the hard coat layer is lowered (the elastic modulus is lowered), the crack resistance is improved, but the scratch resistance is lowered. Therefore, it is difficult for the conventional technique to achieve both scratch resistance and crack resistance (workability) at a high level. The laminated polyester film of the present invention has a sea-island structure (a region having a different elastic modulus) on the surface of the layer (X), whereby, while exhibiting scratch resistance in the layer (X) in the high elastic modulus portion, stress during processing can be dispersed in the low elastic modulus portion, and thus both scratch resistance and crack resistance (workability) can be achieved at a high level.

The method for forming a sea-island structure in the layer (X) is not particularly limited, but examples thereof include a method in which metal oxide particles (A) described later and a binder component in which compatibility with the metal oxide particles (A) is controlled are mixed and used as constituent components of the layer (X), a method in which a high elastic modulus component and a low elastic modulus component are alternately arranged in a pattern in the plane direction of the layer (X), and the like. Among the above methods, the method in which metal oxide particles (A) and a binder component in which compatibility with the metal oxide particles (A) is controlled are mixed and used can efficiently form the sea-island structure, which is preferable.

In the laminated polyester film of the present invention, the layer (X) has a sea component with an elastic modulus (G2) of 4,000 MPa or less, and a ratio (G1/G2) of the elastic modulus (G1) of the island component and the elastic modulus (G2) of the sea component is required to be 1.5 to 4.0. By controlling the elastic modulus (G2) of the sea component and the elastic modulus (G1) of the island component in the above range, the scratch resistance is exhibited in the island component having a high elastic modulus, and when stress such as punching or bending occurs by the sea component having a low elastic modulus, the stress can be relaxed in the entire sea component, and fracture of the layer (X), that is, cracking, can be suppressed. When the elastic modulus (G2) of the sea component exceeds 4000 MPa, a stress relaxation effect is insufficient and the workability deteriorates. When the ratio (G1/G2) of the elastic modulus (G1) of the island component and the elastic modulus (G2) of the sea component is less than 1.5, the elastic modulus of the island component becomes smaller and the scratch resistance is not exhibited. When the ratio (G1/G2) of the elastic modulus (G1) of the island component and the elastic modulus (G2) of the sea component exceeds 4.0, a difference in elastic modulus between the sea component and the island component is large, and there is a problem that workability of the layer (X) deteriorates by stress concentration. The elastic modulus (G2) of the sea component is more preferably 1000 MPa or more and 4000 MPa or less, and further preferably 1500 MPa or more and 3000 MPa or less. The ratio (G1/G2) of the elastic modulus (G1) of the island component and the elastic modulus (G2) of the sea component is more preferably 2.0 or more and 3.5 or less, and further preferably 2.5 or more and 3.5 or less.

In the laminated polyester film of the present invention, it is preferable that the island component of the layer (X) contains the metal oxide particles (A). The phrase "the island component of the layer (X) contains the metal oxide particles (A)" indicates that the metal oxide (A) is present on the surface of the island component of the layer (X), and whether the metal oxide (A) is present on the surface of the island component of the layer (X) is confirmed by a measurement method described later. By containing the metal oxide particles (A) in the island component of the layer (X), a highly hard and dense nanometer-sized uneven structure is formed on the surface of the layer (X), and as a result of friction force being dispersed, the scratch resistance can be improved. Moreover, when the island component contains metal oxide particles (A) and the sea component contains a binder resin such as a urethane resin or an acrylic resin, a shape of the island component is easily made into a non-circular shape by a production method described later or the like.

In the laminated polyester film of the present invention, the shape of the island component on the surface of the layer (X) preferably has a ratio of the shortest axial length and the longest axial length of 1.5 or more. In the present invention, the longest axial length indicates a length of the longest line segment among line segments that connect ends of the island component. Further, in the present invention, the shortest axial length indicates a length of a line segment that passes through a midpoint of the line segment for which the longest axial length is obtained and that connects the ends of the island component in a straight line orthogonal to the longest axial length. When the shape of the island component on the surface of the layer (X) is a non-circular shape in which the ratio of the shortest axial length and the longest axial length is 1.5 or more, a stress during punching can be dispersed not only in the sea component but also in the island component, and workability can be further improved. The ratio of the shortest axial length and the longest axial length of the island component is more preferably 1.5 or more and 10 or less, and further preferably 2.0 or more and 8.0 or less. When the shape of the island component is too small in the ratio of the shortest axial length and the longest axial length, it becomes difficult to obtain the effect of dispersing the stress during punching not only in the sea component but also in the island component, and not only the workability may be reduced, but also the scratch resistance may be poor. The method for setting the ratio of the shortest axial length and the longest axial length of the island component to the above range is not particularly limited, but examples thereof include a method of incorporating plate-shaped or needle-shaped particles into the layer (X), or a method of coating the layer (X) with a coating agent composition (x) containing specific metal oxide particles (A) described later, then forming using a step of subjecting the polyester film to a stretching treatment in at least one direction and a heat treatment to form anisotropic aggregates (particles) on the surface of the layer (X).

In the laminated polyester film of the present invention, an area ratio of the island component on the surface of the layer (X) is preferably 10 to 60%. By setting the area ratio to the above range, both scratch resistance and workability can be achieved. It is more preferably 15% or more and 50% or less. When the area ratio occupied by the island component is too low, an effect of dispersing friction force may not be sufficiently obtained, and the scratch resistance may be insufficient. On the other hand, when the area ratio is too high, an effect of relaxing stress is insufficient on the occurrence of stress such as punching or bending, so that workability may be insufficient such as cracking, or metal adhesion may be reduced. A method for controlling the area ratio occupied by the island component on the surface of the layer (X) is not particularly limited. For example, when the method in which metal oxide particles (A) described later and a binder component in which compatibility with the metal oxide particles (A) is controlled are mixed and used as constituent components of the layer (X) is adopted as the method for forming a sea-island structure in the layer (X), it is possible to control by a mixing ratio of the metal oxide particles (A) and the binder component in which compatibility with the metal oxide particles (A) is controlled, and when the mixing ratio of (A) is increased, the area ratio occupied by the island component tends to increase. On the other hand, when the method in which a high elastic modulus component and a low elastic modulus component are alternately arranged in a pattern in the plane direction of the layer (X) is adopted as the method for forming a sea-island structure in the layer (X), the area ratio occupied by the island component on the surface of the layer (X) can be controlled by controlling a pattern arrangement ratio of the high elastic modulus component and the low elastic modulus component.

### [Metal Oxide Particles (A)]

In the laminated polyester film of the present invention, the layer (X) preferably contains metal oxide particles (A) containing at least one metal element selected from the group consisting of Si, Al, Ti, Zr, Se and Fe. By containing the metal oxide particles (A), formation of a nanometer-sized uneven structure on the surface layer of the layer (X) is facilitated, the layer (X) has improved sliding properties and can have excellent scratch resistance. The metal oxide particles (A) used in the laminated polyester film of the present invention, specific examples thereof include silicon dioxide (silica) (SiO₂), aluminum oxide (Al₂O₃), titanium dioxide (TiO₂), zirconium dioxide (ZrO₂), selenium dioxide (SeO₂), iron oxide (Fe₂O₃) particles, and the like. These may be used alone or two or more of them may be used in combination.

In particular, by using, titanium oxide (TiO₂) particles, aluminum oxide (Al₂O₃) particles, zirconium oxide (ZrO₂) particles as the metal oxide particles (A), scratch resistance can be imparted while suppressing interference unevenness of the resin layer (X), which is thus preferable.

When the metal oxide particles (A) used in the laminated polyester film of the present invention have a particle diameter of 10 to 100 nm, a dense nanometer-sized uneven structure is formed on the surface of the layer (X), and the friction force is dispersed, resulting in excellent scratch resistance, which is thus preferable. When the particle diameter is too small, the effect of dispersing the friction force may not be sufficiently obtained and the scratch resistance may be insufficient, and when the particle diameter is too large, appearance of the film such as transparency may be impaired. The particle diameter of the metal oxide particles (A) in the present invention refers to a particle diameter determined by a transmission electron microscope (TEM) by the following method.

### (How to determine particle diameter of metal oxide particles (A))

A microtome was used to prepare small pieces cut in a direction perpendicular to the surface of the laminated polyester film, and cross sections thereof were observed with a transmission electron microscope (TEM) at a magnification of 100,000 times and photographed. From the cross-sectional photographs, particle size distribution of particles present in the film was determined using image analysis software Image-Pro Plus (NIPPON ROPER K.K). The cross-sectional photographs were selected from different arbitrary measurement fields of view, diameters (equivalent circle diameters) of 200 or more particles arbitrarily selected from the cross-sectional photographs were measured to obtain a cross-sectional area standard particle size distribution plotted with the horizontal axis as a particle diameter and the vertical axis as an abundance ratio of particles. In the cross-sectional area standard particle size distribution, the particle diameter as the horizontal axis is represented by a class at intervals of 5 nm with 0 nm as a starting point (particle diameter of 0 nm or more and less than 5 nm is "0 nm" class, particle diameter of 5 nm or more and less than 10 nm is "5 nm" class, and every 5 nm class later), the abundance ratio of particles as the vertical axis is represented by a calculation formula "Abundance ratio = Total cross-sectional area of detected particles with corresponding particle diameter/Total cross-sectional area of all detected particles". From a chart of the abundance ratio of particles obtained above, a peak top particle diameter showing the maximum is read.

The metal oxide particles (A) used in the laminated polyester film of the present invention preferably further have a resin component on part or all of the surface of the metal oxide particles (A). As the resin component, materials such as acrylic resin, polyester resin and urethane resin can be used. In particular, from the viewpoint that the shape of the island component on the surface of the layer (X) can be easily made into a non-circular shape, the metal oxide particles (A) are preferably a composition (AD) having an acrylic resin (D) on part or all of the surface of the metal oxide particles (A). By using the composition (AD) having the acrylic resin (D), the metal oxide particles (A) in the layer (X) can be nano-dispersed, and when a force is applied to the layer (X), the force can be distributed to the particles. As a result, it becomes possible to improve the scratch resistance of the laminated polyester film. In addition, the transparency of the resin layer can be maintained, which is thus preferable.

Examples of the method for obtaining a composition (AD) having an acrylic resin (D) on part or all of the surface of the metal oxide particles (A) include a method in which the metal oxide particles (A) described later are surface-treated with the acrylic resin (D) and the like. Specifically, the following methods (i) to (iv) are exemplified. In the present invention, the surface treatment refers to a treatment of adsorbing and adhering the acrylic resin (D) on all or part of the surface of the metal oxide (A) having a specific element.

(i) A method in which a mixture obtained by previously mixing the metal oxide particles (A) and the acrylic resin (D) is added to a solvent and then dispersed.
(ii) A method in which the metal oxide particles (A) and the acrylic resin (D) are sequentially added to and dispersed in a solvent.
(iii) A method in which the metal oxide particles (A) and the acrylic resin (D) are previously dispersed in a solvent, and the obtained dispersion is mixed.
(iv) A method in which the metal oxide particles (A) are dispersed in a solvent and then the acrylic resin (D) is added to the obtained dispersion.

The intended effect can be obtained by any of these methods.

Further, as a device for dispersing, a dissolver, a high speed mixer, a homomixer, a kneader, a ball mill, a roll mill, a sand mill, a paint shaker, a SC mill, an annular mill, a pin mill or the like can be used.

In addition, as a dispersion method, a rotating shaft is rotated at a peripheral speed of 5 to 15 m/s using the above device. The rotation time is 5 to 10 hours.

Further, it is more preferable to use dispersion beads such as glass beads during dispersion in terms of enhancing dispersibility. The bead diameter is preferably 0.05 to 0.5 mm, more preferably 0.08 to 0.5 mm, and particularly preferably 0.08 to 0.2 mm.

The mixing and stirring method can be performed by shaking a container by hand, using a magnetic stirrer or a stirring blade, or ultrasonic irradiation, vibration dispersion or the like.

Whether all or part of the surface of the metal oxide particles (A) has the acrylic resin (D) can be confirmed by the following analysis method. An object to be measured is subjected to centrifugation by Hitachi desktop ultracentrifuge (CS150NX manufactured by Hitachi Koki Co., Ltd.) (rotation speed 3000 rpm, separation time 30 minutes) to precipitate the metal oxide particles (A) (and the acrylic resin (D) adsorbed on the surface of the metal oxide particles (A)), then a supernatant liquid is removed, and a precipitate is concentrated to dryness. The concentrated and dried precipitate is analyzed by X-ray photoelectron spectroscopy (XPS) to confirm the presence or absence of the acrylic resin (D) on the surface of the metal oxide particles (A). When it is confirmed that the acrylic resin (D) is present on the surface of the metal oxide particles (A) in an amount of 1% by weight or more, based on a total of 100% by weight of the metal oxide particles (A), the surface of the metal oxide particles (A) has the acrylic resin (D), and it is a composition (AD) having the acrylic resin (D) on part or all of the surface of the metal oxide particles (A).

### [Acrylic Resin (D)]

As described above, in the laminated polyester film of the present invention, the metal oxide particles (A) contained in the layer (X) are preferably a composition (AD) having an acrylic resin (D) on part or all of the surface thereof. By using the composition (AD) having the acrylic resin (D), the metal oxide particles (A) in the layer (X) can be nano-dispersed, the transparency of the resin layer is maintained, and when a force is applied to the resin layer, the force can be distributed to the particles. As a result, it becomes possible to improve the scratch resistance of the laminated polyester film.

The acrylic resin (D) in the present invention is preferably a resin having a monomer unit (d₁) represented by formula (1), a monomer unit (d₂) represented by formula (2), and a monomer unit (d₃) represented by formula (3). 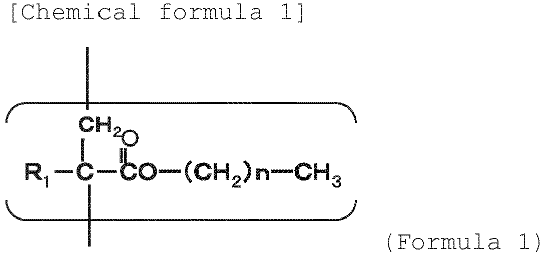 wherein R₁ group represents a hydrogen element or a methyl group, and n represents an integer of 9 or more and 34 or less. 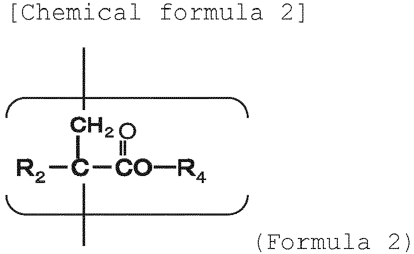 wherein R₂ group represents a hydrogen element or a methyl group, and R₄ group represents a group containing two or more saturated carbocyclic rings. 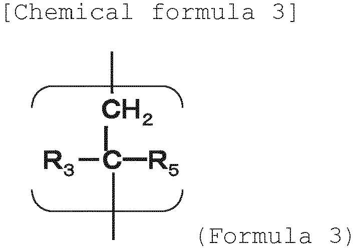 wherein R₃ group represents a hydrogen element or a methyl group, and R₅ group represents a hydroxyl group, a carboxyl group, a tertiary amino group, a quaternary ammonium salt group, a sulfonic acid group, or a phosphoric acid group.

Here, the acrylic resin (D) in the present invention is preferably a resin having the monomer unit (d₁) represented by the formula (1).

In the formula (1), when an acrylic resin having a monomer unit in which n is less than 9 is used, dispersibility of metal oxide particles (A) in an aqueous solvent (details of the aqueous solvent will be described later) becomes unstable. When an acrylic resin having a monomer unit in which n in the formula (1) is less than 9 is used, the metal oxide particles (A) agglomerate violently in the coating agent composition, or in some cases the metal oxide particles (A) precipitate in the aqueous solvent. As a result, transparency of the laminated polyester film may be impaired, or a protrusion may be formed, which may lead to a defect. On the other hand, an acrylic resin having a monomer unit in which n in the formula (1) exceeds 34 has a remarkably low solubility in the aqueous solvent, and thus the acrylic resin is likely to aggregate in the aqueous solvent. Since such agglomerates are larger than a wavelength of visible light, it may not be possible to obtain a laminated polyester film having good transparency, or interference spot after coating film lamination may become poor. By using a resin having the monomer unit (d₁) represented by the formula (1) as described above, while the metal oxide (A) is dispersed in an aqueous solvent with a moderate interaction, a plurality of the metal oxide (A) has anisotropy after drying, and finely aggregates at nano-order level in the layer (X) to form a non-circular high elastic modulus region (island component) on the surface of the layer (X). Therefore, the stress during punching can be dispersed, and the workability can be further improved.

In order that the acrylic resin (D) in the present invention has the monomer unit (d,_) represented by the formula (1), it is necessary to use a (meth)acrylate monomer (d₁') represented by a following formula (4) as a raw material for polymerization.

The (meth)acrylate monomer (d₁') is a (meth)acrylate monomer in which n in the formula (4) is represented by an integer of preferably 9 or more and 34 or less, more preferably 11 or more and 32 or less, and further preferably 13 or more and 30 or less.

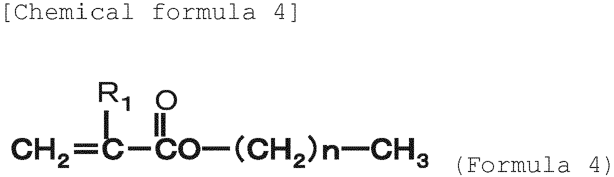

The (meth)acrylate monomer (d₁') is not particularly limited as long as it is a (meth)acrylate monomer in which n in the formula (4) is 9 or more and 34 or less, and specific examples thereof include decyl (meth)acrylate, dodecyl (meth)acrylate, tridecyl (meth)acrylate, tetradecyl (meth)acrylate, 1-methyltridecyl (meth)acrylate, hexadecyl (meth)acrylate, octadecyl (meth)acrylate, eicosyl (meth)acrylate, docosyl (meth)acrylate, tetracosyl (meth)acrylate and triacontyl (meth)acrylate, and dodecyl (meth)acrylate and tridecyl (meth)acrylate are particularly preferred. These may be used alone or in a mixture of two or more kinds.

Moreover, the acrylic resin (D) in the present invention is preferably a resin having the monomer unit (d₂) represented by the formula (2).

In the formula (2), when an acrylic resin having a monomer unit containing only one saturated carbocyclic ring is used, a function as steric hindrance becomes insufficient, and the metal oxide particles (A) aggregate or precipitate in the coating agent composition, or in some cases the metal oxide particles (A) precipitate in the aqueous solvent. As a result, transparency of the laminated polyester film may be impaired, or a protrusion may be formed, which may lead to a defect.

Since such agglomerates are larger than a wavelength of visible light, it may not be possible to obtain a laminated polyester film having good transparency. In order that the acrylic resin (D) in the present invention has the monomer unit (d₂) represented by the formula (2), it is necessary to use a (meth)acrylate monomer (d') represented by a following formula (5) as a raw material for polymerization.

As the (meth)acrylate monomer represented by the formula (5) (d₂'), a compound having various cyclic structures such as crosslinked condensed cyclic (two or more rings each share two elements, and have a bonded structure) and spiro cyclic (shares one carbon element, and has a structure in which two cyclic structures are bonded), a bicyclo, tricyclo or tetracyclo group, can be specifically exemplified. Among them, a (meth)acrylate containing a bicyclo group is particularly preferable from the viewpoint of compatibility with the binder.

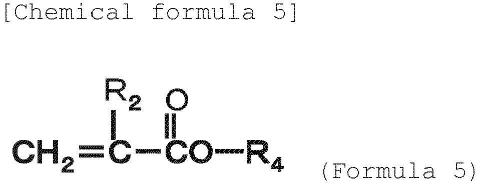

Examples of the (meth)acrylate containing a bicyclo group include isobornyl (meth)acrylate, bornyl (meth)acrylate, dicyclopentanyl (meth)acrylate, dicyclopentenyl (meth)acrylate, adamantyl (meth)acrylate, dimethyladamantyl (meth)acrylate and the like, and isobornyl (meth)acrylate is particularly preferable.

Further, the acrylic resin (D) in the present invention is preferably a resin having the monomer unit (d₃) represented by the formula (3).

When an acrylic resin having a monomer unit in which the R₅ group in the formula (3) does not have any of a hydroxyl group, a carboxyl group, a tertiary amino group, a quaternary ammonium group, a sulfonic acid group and a phosphoric acid group is used, compatibility of the acrylic resin with the aqueous solvent becomes insufficient, the acrylic resin may precipitate in the coating agent composition, accordingly the metal oxide particles (A) may aggregate or precipitate, or the metal oxide particles (A) may aggregate in the drying step.

Since such agglomerates are larger than a wavelength of visible light, it may not be possible to obtain a laminated polyester film having good transparency. In order that the acrylic resin (D) in the present invention has the monomer unit (d₃) represented by the formula (3), it is necessary to use a (meth)acrylate monomer (d₃') represented by a following formula (6) as a raw material for polymerization.

The following compounds are exemplified as the (meth)acrylate monomer (d₃') represented by the formula (6) .

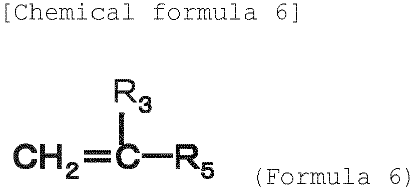

Examples of the (meth)acrylate monomer having a hydroxyl group include monoesterified products of polyhydric alcohols such as 2-hydroxyethyl (meth)acrylate, 2-hydroxypropyl (meth)acrylate, 2,3-dihydroxybutyl (meth)acrylate, 4-hydroxybutyl (meth)acrylate or polyethylene glycol mono(meth)acrylate with (meth)acrylic acid, or a compound obtained by ring-opening polymerization of ε-caprolactone to the monoesterified product and the like, and 2-hydroxyethyl (meth)acrylate and 2-hydroxypropyl (meth)acrylate are particularly preferable.

Examples of the (meth)acrylate monomer having a carboxyl group include α,β-unsaturated carboxylic acids such as acrylic acid, methacrylic acid, itaconic acid, fumaric acid and maleic acid, or half-esterified products of hydroxyalkyl (meth)acrylate with acid anhydride and the like, and acrylic acid and methacrylic acid are particularly preferable.

Examples of the tertiary amino group-containing monomer include N,N-dialkylaminoalkyl (meth)acrylates such as N,N-dimethylaminoethyl (meth)acrylate, N,N-diethylaminoethyl (meth)acrylate and N,N-dimethylaminopropyl (meth)acrylate, N,N-dialkylaminoalkyl(meth)acrylamides such as N,N-dimethylaminoethyl(meth)acrylamide, N,N-diethylaminoethyl(meth)acrylamide and N,N-dimethylaminopropyl(meth)acrylamide, and N,N-dimethylaminoethyl (meth)acrylate is particularly preferable.

The quaternary ammonium salt group-containing monomer is preferably a compound obtained by acting a quaternizing agent such as epihalohydrin, benzyl halide or alkyl halide on the tertiary amino group-containing monomer, and specific examples thereof include (meth)acryloyloxyalkyltrialkylammonium salts such as 2-(methacryloyloxy)ethyltrimethylammonium chloride, 2-(methacryloyloxy)ethyltrimethylammonium bromide and 2-(methacryloyloxy)ethyltrimethylammonium dimethylphosphate, (meth)acryloylaminoalkyltrialkylammonium salts such as methacryloylaminopropyltrimethylammonium chloride and methacryloylaminopropyltrimethylammonium bromide, tetraalkyl (meth)acrylates such as tetrabutylammonium (meth)acrylate, trialkylbenzylammonium (meth)acrylates such as trimethylbenzylammonium (meth)acrylate, and 2-(methacryloyloxy)ethyltrimethylammonium chloride is particularly preferable.

Examples of the sulfonic acid group-containing monomer include (meth)acrylamide-alkanesulfonic acid such as butylacrylamide sulfonic acid and 2-acrylamido-2-methylpropanesulfonic acid, or sulfoalkyl (meth)acrylates such as 2-sulfoethyl (meth)acrylate and the like, and 2-sulfoethyl (meth)acrylate is particularly preferable.

Examples of the phosphoric acid group-containing acrylic monomer include acid phosphooxyethyl (meth)acrylate and the like, and acid phosphooxyethyl (meth)acrylate is particularly preferable.

Among these, it is particularly preferable that the acrylic resin (D) is a resin having the monomer unit (d₃) represented by the formula (3), in which the R₅ group in the formula (3) is a hydroxyl group or a carboxyl group, in that it has a high adsorption force with the metal oxide particles (A) described later and is capable of forming a stronger film.

In the present invention, the content of the acrylic resin (D) in the resin layer is preferably 5 to 30% by weight, and by setting the content to this range, adsorption of the metal oxide particles (A) and the acrylic resin (D) becomes stronger, and the scratch resistance of the resin layer can be improved. In particular, the content of the acrylic resin (D) is more preferably 5% by weight or more and 30% by weight or less with respect to the entire layer (X), and the content of the acrylic resin (A) in the resin layer is more preferably 10% by weight or more and 30% by weight or less. In the present invention, the content in the layer (X) indicates a content in the solid content of the coating agent composition forming the resin layer ([(Weight of coating agent composition) - (Weight of solvent)]). When the content of the acrylic resin (A) is too small, the effect of adsorption of the metal oxide particles (A) and the acrylic resin (D) becomes insufficient, not only the scratch resistance is lowered, but also it becomes difficult to obtain the effect of dispersing the stress during punching not only in the sea component but also in the island component, and the workability may be reduced. On the other hand, when the content of the acrylic resin (A) is too large, an effect of relaxing stress is likely to be insufficient on the occurrence of stress such as punching or bending, and it may be difficult to obtain workability such as cracking.

The laminated polyester film of the present invention, when the content of the metal oxide particles (A) in the layer (X) is 15 to 50% by weight, with respect to the entire resin layer (X), formation of a sea-island structure is facilitated by filling the metal oxide particles (A) in the resin layer, and the entire layer (X) has improved hardness and has excellent scratch resistance by increasing the area of the island components, which is thus preferable. The content of the metal oxide particles (A) is preferably 20 to 50% by weight, and more preferably 25 to 35% by weight. When the content of the metal oxide particles (A) is out of the range of 15 to 50% by mass, the area ratio occupied by the island component described above tends to be out of the preferred range. Therefore, when the content of the metal oxide particles (A) is less than 15% by mass, the scratch resistance may be insufficient, and when it exceeds 50% by mass, workability may be insufficient such as cracking, or metal adhesion may be reduced.

Further, in the laminated polyester film of the present invention, when the thickness of the layer (X) is 0.1 to less than 5 µm, it is easy to form the layer (X) in a short time, an influence of curing inhibition of the surface layer of the layer (X) can be suppressed, and the layer (X) has excellent scratch resistance, which is thus preferable. Although the upper limit of the thickness of the layer (X) is not limited, it is preferably 3 µm or less in terms of transparency and productivity. Further, it is more preferably 0.3 um or more and less than 2 µm, and further preferably 0.5 µm or more and less than 1.5 um. When the layer (X) is too thin, the scratch resistance of the layer (X) may be insufficient.

### [Binder Resin]

The laminated polyester film of the present invention preferably contains a binder resin as a component of the layer (X). The binder resin includes known acrylic resins, polyester resins, urethane resins, and copolymers thereof, and particularly in the present invention, it is preferable to contain a urethane resin as the binder resin. By containing the urethane resin, the polarity of the layer (X) can be improved and adhesion to a metal layer such as a sputtered layer or a vapor deposition layer can be improved. Examples of the method of incorporating the urethane component into the layer (X) include a method of incorporating a polyurethane resin into the layer (X).

As the polyurethane resin, for example, a resin having a constitutional unit derived from a polyisocyanate compound (I) and a polyol (II) unit can be used. The polyurethane resin may have units other than the polyisocyanate compound (I) unit and the polyol (II) unit (for example, carboxylic acid unit, amine unit, etc.).

Examples of the polyurethane resin include polyacrylic polyurethane resins, polyether polyurethane resins, polyester polyurethane resins, and the like. The polyurethane resin may be used alone or in combination of two or more kinds.

The polyisocyanate compound (I) is not particularly limited as long as it has two or more isocyanate groups.

Examples of the polyisocyanate compound (I) include polyisocyanates (for example, aliphatic polyisocyanate, alicyclic polyisocyanate, araliphatic polyisocyanate, aromatic polyisocyanate, etc.), modified products [or derivatives, for example, multimers (dimers, trimers, etc.), carbodiimide compounds, biuret compounds, allophanate compounds, uretdione compounds, modified polyamines, etc.] of polyisocyanate, and the like. The polyisocyanate compound (I) may be used alone or in combination of two or more kinds. The aliphatic polyisocyanate is not particularly limited, and examples thereof include aliphatic diisocyanates [for example, alkane diisocyanates (for example, C2-20 alkane diisocyanates such as tetramethylene diisocyanate, hexamethylene diisocyanate, 2,2,4-trimethylhexamethylene diisocyanate, dodecamethylene diisocyanate, lysine diisocyanate, 2-methylpentane-1,5-diisocyanate and 3-methylpentane-1,5-diisocyanate, preferably C4-12 alkane diisocyanates, etc.)], aliphatic polyisocyanates having 3 or more isocyanate groups (for example, aliphatic isocyanates having 3 or more and 6 or less functional groups such as 1,4,8-triisocyanatooctane), and the like.

The alicyclic polyisocyanate is not particularly limited, and examples thereof include alicyclic diisocyanates {for example, cycloalkane diisocyanates (for example, C5-8 cycloalkane diisocyanates such as methyl-2,4- or 2,6-cyclohexane diisocyanate, etc.), isocyanatoalkylcycloalkane isocyanates [for example, isocyanato C1-6 alkyl C5-10 cycloalkane isocyanates such as 3-isocyanatomethyl-3,5,5-trimethylcyclohexyl isocyanate (isophorone diisocyanate, IPDI), etc.], di(isocyanatoalkyl)cycloalkanes [for example, di(isocyanato C1-6 alkyl) C5-10 cycloalkanes such as hydrogenated xylylene diisocyanate], di(isocyanatocycloalkyl)alkanes [for example, bis(isocyanato C5-10 cycloalkyl) C1-10 alkanes such as hydrogenated diphenylmethane-4,4'-diisocyanate (4,4'-methylenebiscyclohexyl isocyanate), etc.], polycycloalkane diisocyanates (such as norbornane diisocyanate), etc.}, alicyclic polyisocyanates having 3 or more isocyanate groups (for example, alicyclic isocyanates having 3 or more and 6 or less functional groups such as 1,3,5-triisocyanatocyclohexane), and the like.

The araliphatic polyisocyanate is not particularly limited, and examples thereof include araliphatic diisocyanates {for example, di(isocyanatoalkyl)arenes [for example, bis(isocyanato C1-6 alkyl) C6-12 arenes such as xylylene diisocyanate (XDI) and tetramethyl xylylene diisocyanate (TMXDI) (1,3- or 1,4-bis(1-isocyanato-1-methylethyl)benzene), etc.]}, araliphatic polyisocyanates having 3 or more isocyanate groups (for example, araliphatic isocyanates having 3 or more and 6 or less functional groups), and the like.

The aromatic polyisocyanate is not particularly limited, and examples thereof include aromatic diisocyanates {for example, arene diisocyanates [for example, C6-12 arene diisocyanates such as o-, m- or p-phenylene diisocyanate, chlorophenylene diisocyanate, tolylene diisocyanate and naphthalene diisocyanate (NDI), etc.], di(isocyanatoaryl)alkanes [for example, bis(isocyanato C6-10 aryl) C1-10 alkanes such as diphenylmethane diisocyanate (MDI) (2,4'-diphenylmethane diisocyanate, 4,4'-diphenylmethane diisocyanate, etc.) and tolidine diisocyanate, etc.], aromatic polyisocyanates having 3 or more isocyanate groups (for example, aromatic isocyanates having 3 or more and 6 or less functional groups such as 4,4'-diphenylmethane-2,2',5,5'-tetraisocyanate), and the like.

In the present invention, it is preferable to use an alicyclic polyisocyanate as the polyisocyanate compound (I) in terms of crack resistance.

The polyol (II) is not particularly limited as long as it has two or more hydroxyl groups.

Examples of the polyol (II) include polyacrylic polyol, polyester polyol, polyether polyol, polyurethane polyol, and the like. The polyol (II) may be used alone or in combination of two or more kinds.

The polyacrylic polyol is, for example, a copolymer having a (meth)acrylic acid ester unit and a unit derived from a component having a hydroxyl group (a component unit having a hydroxyl group), or the like. The polyacrylic polyol may have units other than the (meth)acrylic acid ester unit and the component unit having a hydroxyl group.

The polyester polyol is, for example, a copolymer having a polycarboxylic acid component unit and a polyol component unit, or the like. The polyester polyol may have units other than the polycarboxylic acid component unit and the polyol component unit. The polyether polyol is, for example, a copolymer added with an alkylene oxide to a polyhydric alcohol, or the like. The polyhydric alcohol is not particularly limited, and for example, the above dihydric alcohol or the like can be used. The polyhydric alcohol may be used alone or in combination of two or more kinds. Moreover, the alkylene oxide is not particularly limited, and examples thereof include C2-12 alkylene oxides such as ethylene oxide, propylene oxide and butylene oxide, and the like. The alkylene oxide may be used alone or in combination of two or more kinds. The polyurethane resin may contain a chain extender as a constituent component (or may have a constituent unit derived from a chain extender). The chain extender is not particularly limited, and for example, a common chain extender such as a glycol (for example, C2-6 alkanediol such as ethylene glycol, 1,4-butanediol, neopentyl glycol or 1,6-hexanediol), a polyhydric alcohol (for example, a polyhydric alcohol having 3 or more and 6 or less hydroxy groups, and having an alkane chain having 2 or more and 6 or less carbon atoms such as glycerin, trimethylolpropane or pentaerythritol) or a diamine (for example, ethylenediamine, hexamethylene diamine, or the like) may be used.

The laminated polyester film of the present invention preferably contains an ether component in the layer (X). By containing the ether component in the layer (X), high flexibility of a polyether structure can relax stress generated during processing and improve workability.

Further, the laminated polyester film of the present invention preferably contains a urethane component in the layer (X) together with the ether component. When the urethane component and the ether component are incorporated into the layer (X), compatibility is controlled, and it is easy to form a sea-island structure on the surface of the layer (X) when incorporating the metal oxide particles (A) into the layer (X). The method of incorporating the urethane component and the ether component into the layer (X) is not particularly limited, and examples thereof include a method using a urethane resin component (B) having an ether bond. Specifically, it is preferably a urethane resin obtained by reacting a polyether polyol compound and an isocyanate compound. In the present invention, having an ether component indicates having an ether bond, and having a urethane component indicates having a urethane bond.

When the urethane resin component (B) having an ether bond as described above is used, hydrophilicity of the urethane resin component is increased. Therefore, when a composition (AD) having metal oxide particles (A) and an acrylic resin (D) on part or all of the surface of the metal oxide particles (A), and a coating agent composition (x) containing a urethane resin component (B) are applied to at least one side of the polyester film to be a base material layer and then heated to form the layer (X), it is possible to form a phase separation structure in which the highly hydrophilic urethane resin component (B) is unevenly distributed on the polyester film side of the material layer which is the base material layer in the layer (X), and a composition (AD) having the metal oxide particles (A) having relatively low hydrophilicity and the acrylic resin (D) on part or all of the surface of the metal oxide particles (A) is unevenly distributed in the vicinity of the surface of the layer (X). Specifically, it is preferable that the layer (X) contains a urethane component and an ether component in an amount of 20% by weight or more. By satisfying such a range, it is possible to form a region (island component) having a high elastic modulus in the vicinity of the surface of the layer (X), by having a phase separation structure that unevenly distributes the metal oxide particles (A) in the vicinity of the surface of the layer (X), and the urethane resin component (B) in the vicinity of an interface with the base material layer of the layer (X). Therefore, workability is exhibited by stress relaxation by the flexible urethane resin component (B) in the inner layer of the layer (X) while exhibiting scratch resistance, thus both scratch resistance and workability can be achieved at a high level, which is thus preferable. When the urethane component and the ether component in the layer (X) are too small, it may be difficult to achieve both scratch resistance and workability.

In the laminated polyester film of the present invention, the layer (X) is a layer formed from the coating agent composition (x) containing the metal oxide particles (A) and the urethane resin component (B), and the weight ratio ((a)/(b)) of the metal oxide particles (A) and the urethane resin component (B) in the coating agent composition (x) is preferably 30/70 to 70/30. By setting to this range, it is easy to form a phase separation structure in which the metal oxide particles (A) are unevenly distributed in the vicinity of the surface of the layer (X) and the urethane resin component (B) is unevenly distributed in the vicinity of the interface with the base material layer of the layer (X), and both scratch resistance and workability can be achieved. When the weight ratio ((a)/(b)) of the metal oxide particles (A) and the urethane resin component (B) is out of the range of 30/70 to 70/30, the area ratio occupied by the island component described above tends to be out of the preferred range. Further, when the weight ratio of the metal oxide particles (A) and the urethane resin component (B) is too small, the scratch resistance may be insufficient, and when the weight ratio of the metal oxide particles (A) and the urethane resin component (B) is too high, the workability may be insufficient such as cracking.

### [Other Ingredients]

In the laminated polyester film of the present invention, when the layer (X) is formed by a coating material composition (x) containing at least one compound selected from a melamine compound, an oxazoline compound, a carbodiimide compound, an isocyanate compound and an epoxy compound, the layer (X) has a densely crosslinked structure, thus has excellent scratch resistance, which is thus preferable. Therefore, the layer (X) of the laminated polyester film of the present invention preferably contains a component derived from a melamine compound, an oxazoline compound, a carbodiimide compound, an isocyanate compound, and an epoxy compound.

In particular, when a coating material composition (x) containing a melamine compound, an oxazoline compound or a carbodiimide compound among them is used, a nitrogen-containing functional group is introduced into the layer (X), so that the polarity is improved, and adhesion to a metal layer such as a sputtered layer or a vapor deposition layer is improved, which is preferable.

As the melamine compound, for example, melamine, a methylolated melamine derivative obtained by condensing melamine and formaldehyde, a compound partially or completely etherified by reacting a methylolated melamine with a lower alcohol, and a mixture thereof or the like can be used. Specifically, a compound having a triazine and a methylol group is particularly preferable. In a case where the melamine compound described below forms a crosslinked structure with a urethane resin (B), an acrylic resin (D), an oxazoline compound, or a carbodiimide compound, an isocyanate compound, an epoxy compound or the like, the melamine compound in the present invention means a component derived from a melamine compound. Moreover, the melamine compound may be either a monomer or a condensate composed of a dimer or higher polymer, or a mixture thereof. As the lower alcohol used for etherification, methyl alcohol, ethyl alcohol, isopropyl alcohol, n-butanol, isobutanol or the like can be used. As the group, one having an imino group, a methylol group, or an alkoxymethyl group such as a methoxymethyl group or a butoxymethyl group in one molecule, and examples thereof are an imino group-type methylated melamine resin, a methylol group-type melamine resin, a methylol group-type methylated melamine resin, a completely alkyl type methylated melamine resin, and the like. Among them, a methylolated melamine resin is most preferable. Further, an acidic catalyst such as p-toluenesulfonic acid may be used to accelerate thermosetting of the melamine compound.

When such a melamine compound is used, not only the scratch resistance is improved due to increase in coating film hardness by self-condensation of the melamine compound, but also a reaction of the melamine compound with a hydroxyl group or carboxylic group contained in the acrylic resin progresses, and a stronger resin layer can be obtained, thus a film having excellent scratch resistance can be obtained.

In a case where the oxazoline compound described below, or the oxazoline compound forms a crosslinked structure with a urethane resin (B), an acrylic resin (D), a melamine compound, an isocyanate compound, a carbodiimide compound or the like, the oxazoline compound means a component derived from an oxazoline compound. The oxazoline compound is not particularly limited as long as it has an oxazoline group as a functional group in the compound, but one containing at least one kind of a monomer containing an oxazoline group, formed of an oxazoline group-containing copolymer obtained by copolymerizing at least one kind of other monomer is preferred.

As the monomer containing an oxazoline group, 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-ethyl-2-oxazoline or the like can be used, and one kind or a mixture of two or more kinds thereof can also be used. Among them, 2-isopropenyl-2-oxazoline is industrially easily available and suitable.

In the oxazoline compound, as the at least one kind of other monomer used for the monomer containing an oxazoline group, it is not particularly limited as long as it is a monomer copolymerizable with the monomer containing an oxazoline group. For example, acrylic acid esters or methacrylic acid esters such as methyl acrylate, methyl methacrylate, ethyl acrylate, ethyl methacrylate, butyl acrylate, butyl methacrylate, 2-ethylhexyl acrylate and 2-ethylhexyl methacrylate, unsaturated carboxylic acids such as acrylic acid, methacrylic acid, itaconic acid and maleic acid, unsaturated nitriles such as acrylonitrile and methacrylonitrile, unsaturated amides such as acrylamide, methacrylamide, N-methylol acrylamide and N-methylol methacrylamide, vinyl esters such as vinyl acetate and vinyl propionate, vinyl ethers such as methyl vinyl ether and ethyl vinyl ether, olefins such as ethylene and propylene, halogen-containing α,β-unsaturated monomers such as vinyl chloride, vinylidene chloride and vinyl fluoride, α,β-unsaturated aromatic monomers such as styrene and α-methylstyrene and the like can be used, and one kind or a mixture of two or more kinds thereof can also be used.

The carbodiimide compound in the present invention indicates a compound having in a molecule one or two or more carbodiimide groups as functional groups or cyanamide groups in a tautomeric relationship with each other. Examples thereof include the carbodiimide compound described below or compounds in which the carbodiimide compound described below forms a crosslinked structure with a urethane resin (B), an acrylic resin (D), a melamine compound, an isocyanate compound, an oxazoline compound or the like.

Known techniques can be applied to the production of the carbodiimide compound, and generally, the carbodiimide compound is obtained by polycondensing a diisocyanate compound in the presence of a catalyst. As the diisocyanate compound which is a starting material of the carbodiimide compound, aromatic, aliphatic, alicyclic diisocyanate or the like can be used, and specifically, tolylene diisocyanate, xylene diisocyanate, diphenylmethane diisocyanate, hexamethylene diisocyanate, cyclohexane diisocyanate, isophorone diisocyanate, dicyclohexyl diisocyanate or the like can be used.

### [Base Material Layer]

The laminated polyester film of the present invention has the layer (X) on at least one of the polyester film (hereinafter, the polyester film may be referred to as a base material layer). The polyester film used as the base material layer is not particularly limited, but is preferably a layer containing polyester as a main component. In addition, in the present invention, the main component represents a component which accounts for 50% by weight or more of the entire resin constituting the layer.

In the present invention, the content of particles in the base material layer is preferably 0.1% by weight or less based on the entire base material layer. By setting the content of the particles to the above range, a laminated polyester film having excellent transparency can be obtained.

Hereinafter, the polyester used for the base material layer of the laminated polyester film of the present invention will be described. First, polyester is a general term for polymers having an ester bond in the main chain, and one containing at least one constituent component selected from ethylene terephthalate, propylene terephthalate, ethylene-2,6-naphthalate, butylene terephthalate, propylene-2,6-naphthalate, ethylene-α,β-bis(2-chlorophenoxy)ethane-4,4'-dicarboxylate and the like can be preferably used.

The polyester film using the above polyester is preferably biaxially oriented. The biaxially oriented polyester film refers to one generally stretched by 2.5 to 5 times respectively in a longitudinal direction and a width direction orthogonal to the longitudinal direction of an unstretched polyester sheet or film, and then subjected to a heat treatment to complete crystal orientation, which shows a biaxially oriented pattern in wide-angle X-ray diffraction. When the polyester film is biaxially oriented, it has sufficient thermal stability, particularly, dimensional stability and mechanical strength, and also good flatness.

In addition, various additives, for example, antioxidants, heat resistance stabilizers, weather resistance stabilizers, ultraviolet absorbing agents, organic easy sliding agents, pigments, dyes, organic or inorganic fine particles, fillers, antistatics, and nucleating agents may be added to the polyester film to such an extent that properties thereof are not deteriorated.

The thickness of the polyester film is not particularly limited and is appropriately selected depending on the application and type, but is usually preferably 10 to 500 um, more preferably 15 to 250 µm and most preferably 20 to 200 um, from the viewpoint of mechanical strength, handleability, and the like. Further, the polyester film may be a composite film obtained by coextrusion, or may be a film obtained by laminating the obtained films by various methods.

### [Method for Producing Laminated Polyester Film]

The method for producing the laminated polyester film of the present invention will be described below with reference to examples, but materials, usage amounts, ratios, treatment contents, treatment procedures and the like shown below can be appropriately changed without departing from the spirit of the present invention. Therefore, the scope of the present invention should not be restrictively interpreted by the examples shown below.

The laminated polyester film of the present invention can be obtained by applying a coating agent composition (x) containing the metal oxide particles (A) and the binder component on a polyester film, and drying a solvent when the coating agent composition contains the solvent to form the layer (X) on the polyester film.

Further, in the present invention, when the coating agent composition (x) contains a solvent, it is preferable to use an aqueous solvent as the solvent (to form an aqueous coating agent). This is because, by using an aqueous solvent, rapid evaporation of the solvent in the drying step can be suppressed, and not only a uniform composition layer can be formed, but also the aqueous solvent is excellent in terms of environmental load.

Here, the aqueous solvent refers to water, or a mixture of water and a water-soluble organic solvent such as an alcohol such as methanol, ethanol, isopropyl alcohol or butanol, a ketone such as acetone or methyl ethyl ketone, or a glycol such as ethylene glycol, diethylene glycol or propylene glycol in an arbitrary ratio.

Further, in the present invention, when an aqueous solvent is used for the coating agent composition (x), it is preferable to apply an aqueous coating agent containing the metal oxide particles (A) and the urethane resin component (B). This is because, by applying as an aqueous coating agent, as compared with an organic solvent-based coating agent, a water dispersant or an emulsifier is arranged in the coating surface layer in a state where the solvent is dried, so that the curing inhibition of a radical polymerization reaction of an acryloyl group described above is suppressed, and the scratch resistance is excellent even when the resin layer is thin.

Examples of a method for uniformly dispersing the metal oxide particles (A) and the binder component in an aqueous solvent include a method of incorporating a hydrophilic group such as carboxylic acid or sulfonic acid in the metal oxide particles (A) and the binder component, and a method of emulsifying the metal oxide particles (A) and the binder component using an emulsifier.

The method for applying the coating agent composition (x) on the polyester film is preferably an in-line coating method. The in-line coating method is a method of performing application in a production process of a polyester film. Specifically, it refers to a method of performing application at an arbitrary stage from melt extrusion of the polyester resin to a heat treatment and winding up after biaxial stretching. Usually, it is applied to any film of an unstretched (unoriented) polyester film in a substantially amorphous state, obtained by melt extrusion and quenching thereafter (film A), a uniaxially stretched (uniaxially oriented) polyester film stretched in a longitudinal direction thereafter (film B), or a biaxially stretched (biaxially oriented) polyester film before heat treatment, which has been further stretched in a width direction (film C).

It is preferable to adopt a method of applying a coating agent composition to any polyester film of the film A and the film B before completion of crystal orientation, then stretching the polyester film uniaxially or biaxially, and heat-treating the film at a temperature higher than the boiling point of a solvent to complete crystal orientation of the polyester film, and at the same time, providing the layer (X). According to the method, since formation of the polyester film, and application and drying of the coating agent composition (i.e., formation of the layer (X)) can be performed simultaneously, there is a merit in terms of production cost. In addition, it is easy to further reduce the thickness of the layer (X) since stretching is performed after application.

Among them, a method of applying the coating agent composition to a film (film B) which has been uniaxially stretched in the longitudinal direction, then stretching the film in the width direction, and heat-treating the film is excellent. This is because the number of stretching steps is smaller by one time as compared with a method of applying the coating agent composition to an unstretched film and then performing biaxial stretching, thus defects and cracks in the composition layer due to stretching hardly occurs, and a composition layer excellent in transparency and smoothness can be formed.

Furthermore, by providing a layer (X) by an in-line coating method, a stretching treatment is applied after applying the coating material composition (x), thereby promoting surface alignment of the metal oxide particles (A), and also promoting formation of anisotropic aggregates of the metal oxide particles (A), and as a result, the shape of the island component of the layer (X) is made noncircular and adjusted to a preferred ratio of the shortest axial length and the longest axial length, whereby the scratch resistance and the workability can be improved.

In the present invention, the layer (X) is preferably provided by an in-line coating method because of the above-mentioned various advantages. Here, the application method of the coating agent composition on the polyester film can use any known application method, for example, a bar coating method, a reverse coating method, a gravure coating method, a die coating method, a blade coating method, or the like.

Therefore, a best method for forming the layer (X) in the present invention is a method of applying a coating agent composition using an aqueous solvent on a polyester film by an in-line coating method, drying and heat-treating the coating agent composition to form the layer (X). More preferably, it is a method of in-line coating the film B with the coating agent composition after uniaxial stretching. In the method for producing the laminated polyester film of the present invention, the drying can be carried out in a temperature range of 80 to 130°C in order to complete removal of the solvent of the coating agent composition. Further, the heat treatment can be carried out in a temperature range of 160 to 240°C in order to complete the crystal orientation of the polyester film and thermosetting of the coating agent composition to complete formation of the resin layer.

Next, the method for producing the laminated polyester film of the present invention will be described by taking a case of using a polyethylene terephthalate (hereinafter referred to as PET) film as the polyester film as an example, but the present invention is not limited to such an example. First, PET pellets are sufficiently vacuum dried, then supplied to an extruder, melt-extruded into a sheet at about 280°C, and cooled and solidified to prepare an unstretched (unoriented) PET film (film A). This film is stretched 2.5 to 5.0 times in the longitudinal direction with a roll heated to 80 to 120°C to obtain a uniaxially oriented PET film (film B). The coating agent composition of the present invention prepared to a predetermined concentration is applied to one side of this film B.

At this time, a surface treatment such as corona discharge treatment may be performed on the coating surface of the PET film before application. By performing a surface treatment such as corona discharge treatment, wettability of the coating agent composition to the PET film is improved, repelling of the coating agent composition is prevented, and a resin layer having a uniform coating thickness can be formed. After application, the ends of the PET film are gripped with clips and led to a heat treatment zone (preheating zone) at 80 to 130°C, and the solvent of the coating agent composition is dried. After drying, the PET film is stretched 1.1 to 5.0 times in the width direction. Subsequently, the PET film is led to a heat treatment zone (heat setting zone) at 160 to 240°C and the heat treatment is carried out for 1 to 30 seconds to complete crystal orientation.

In this heat treatment step (heat setting step), a relaxation treatment of 3 to 15% may be performed in the width direction or the longitudinal direction, as necessary. The laminated polyester film thus obtained is a laminated polyester film having excellent transparency, scratch resistance and anti-blocking properties.

In the laminated polyester film of the present invention, an intermediate layer may be provided between the resin layer and a thermoplastic resin layer. However, in the case of providing the intermediate layer, the film may be scratched at the time of winding a film laminated with the intermediate layer, or in steps until providing the resin layer of the present invention thereafter. Therefore, in the present invention, it is preferable that the resin layer and the thermoplastic resin layer are directly laminated.

In the laminated polyester film of the present invention, the constitution of the thermoplastic resin layer is not limited, and examples thereof include constitutions such as a single-layer constitution consisting of only layer A, a laminated constitution of layer A/layer B, that is, a two-kind two-layer laminated constitution, a laminated constitution of layer A/layer B/layer A, that is, a two-kind three-layer laminated constitution, and a laminated constitution of layer A/layer B/layer C, that is, a three-kind three-layer laminated constitution.

The method for laminating the thermoplastic resin layer in the laminated polyester film of the present invention is not limited, and examples thereof include a lamination method by a coextrusion method, a lamination method by lamination, and a combination method thereof. From the viewpoint of transparency and production stability, it is preferable to adopt the coextrusion method. In the case of forming into a laminate, a different resin constitution may be used for the purpose of imparting different functions to respective layers. For example, in the case of a laminated constitution of layer A/layer B/layer A, that is, a two-kind three-layer laminated constitution, examples thereof include a method of constituting the layer B by homopolyethylene terephthalate from the viewpoint of transparency, and adding particles to the layer A for providing easy sliding properties, and the like.

### [Methods for Measuring Properties and Methods for Evaluating Effects]

Methods for measuring properties and methods for evaluating effects in the present invention are as follows.

### (1) Measurement of Layer (X)

### (1-1) Elastic modulus of layer (X)

Using AFM (Atomic Force Microscope) manufactured by BRUKER, "Dimension Icon Scan Asyst", "absolute calibration" (warp sensitivity measurement, spring constant calibration, probe tip curvature measurement (Scan Asyst Noise Threshold: 1.0 nm)) was performed, then a surface of a layer (X) side of a laminated polyester film was measured, and the elastic modulus was determined from the obtained surface information.
Software: "NanoScope Analysis"
Measurement probe: RTESPA-300
Measurement mode: Peak Force QNM in Air
Measurement range: 1 um × 1 um
Number of measurement lines: 512
Measurement speed: 0.977 Hz
Response sensitivity: 25
Pressing force: 80 nN
Poisson's ratio: 0.3

Specifically, after measurement, "Roughness" of "DMTModulus" is selected, and an image displayed on the screen is binarized with "ScionImage" (maximum value: 10 GPa, minimum value: 0 GPa, threshold 180) to make a part with a high elastic modulus white (island) and make a part with a low elastic modulus black (sea), to obtain an elastic modulus image of the layer (X). When the elastic modulus image is obtained by making a part with a high elastic modulus white and making a part with a low elastic modulus black, with maximum value: 10 GPa, minimum value: 0 GPa, and threshold value 180, regions with an elastic modulus exceeding approximately 4500 MPa become black, and regions with an elastic modulus of 4500 MPa or less become white.

### (1-2) Presence or absence of sea-island structure

The elastic modulus image obtained in (1-1) is divided into 40 sections of 1 µm × 1 µm vertically and horizontally and divided into 1600 regions of 25 nm × 25 nm. In the 1600 regions, when having both one region with entirely black color and one region with entirely white color, it was determined that the elastic modulus image has a sea-island structure.

In addition, a measurement range was arbitrarily selected, and measurement was performed 10 times, and when black portions and white portions were observed 8 times or more, it was determined that the elastic modulus image has a sea-island structure.

### (1-3) Elastic modulus of sea component and island component

In the 1600 regions in the elastic modulus image obtained in (1-1), the elastic modulus was measured for all of one regions with entirely black color, and the average value thereof was defined as an elastic modulus (G2) of the sea component. Further, in the 1600 regions in the elastic modulus image obtained in (1-1), the elastic modulus was measured for all of one regions with entirely white color, and the average value thereof was defined as an elastic modulus (G1) of the island component (G1). In addition, a measurement range was arbitrarily selected, measurement was performed 10 times, and the average value of 8 times in total excluding the maximum value and the minimum value was adopted.

### (1-4) Axial length of island component

Regarding a whitened island part of the elastic modulus image obtained in (1-1), a longest line segment among line segments connecting the ends of the island component was obtained as a longest axial length of the island component. Further, of line segments connecting the ends of the island component on a straight line orthogonal to the longest axial length, a longest length was defined as a shortest axial length of the island component. All the island components of the elastic modulus image obtained in (1-1) were measured, and the average value thereof was defined as a ratio of the shortest axial length and the longest axial length. A measurement range was arbitrarily selected, measurement was performed 10 times, and the average value of 8 times in total excluding the maximum value and the minimum value was adopted.

### (1-5) Area ratio of island component

Regarding the elastic modulus image obtained in (1-1), the area ratio of the black part (sea portion) was calculated, and "100-black portion area ratio" was defined as an island portion area ratio.

### (1-6) Presence or absence of metal oxide particles (A) in island component

By observing the surface of the layer (X) with a TEM (transmission electron microscope) at a magnification of 100,000 times, elemental analysis by EDX (energy dispersive X-ray spectroscopy) was performed for the island component of the layer (X) on the polyester film to determine the presence or absence of the metal oxide particles (A).

Specifically, for the island component of the layer (X) observed with field emission scanning electron microscope (model No. S-4800) manufactured by Hitachi High-Tech Corporation, element detection was performed with QUANTAX Flat QUAD System (Model No. Xflash 5060FQ) manufactured by Bruker AXS. Then, when at least one metal element selected from the group consisting of Si, Al, Ti, Zr, Se and Fe was detected, it was determined to have the metal oxide particles (A).

Among the island components of the layer (X), when 50% or more of the island components have the metal oxide particles (A), it was determined that the island component of the layer (X) contained the metal oxide particles (A).

### (2) Scratch resistance

Rubbing steel wool (Bonstar #0000, manufactured by NIHON STEEL WOOL Co., Ltd.) 10 times with a load of 200 g/cm², and the presence or absence of occurrence of scratches on the surface of the laminated polyester film was visually confirmed, and the following evaluations were performed.
S: No scratch
A: 1 to 5 scratches
B: 6 to 10 scratches
C: 11 or more scratches.

### (3) Workability (crackability)

Two vinyl chloride sheets were stacked on the layer (X) face of the laminated polyester film, and punching was performed with a Thomson blade from the side opposite to the layer (X) face. Then, the layer (X) face side of the punched sample was confirmed by a laser microscope for about 3 cm, and the presence or absence of cracking on the punched end face was evaluated.
S: No crack
A: 10 or less cracks of 1 mm or more
B: 30 or less cracks of 1 mm or more
C: 31 or more cracks of 1 mm or more.

### (4) Metal adhesion

A Cu sputtered layer (thickness: 200 nm) was provided on the layer (X) side of the laminated polyester film by a sputtering process, 100 cross-cuts of 1 mm² were put in the Cu sputtered layer, and "Cellotape" (registered trademark) (manufactured by Nichiban Co., Ltd., CT405AP) was adhered and pressed by a hand roller with a load of 1.5 kg/cm², then rapidly peeled in a direction of 180° from the laminated polyester film. Adhesion was evaluated on a 4-point scale, based on the number of remaining grids. The evaluation was performed by an average value of 10 times. C was a practically problematic level, B was a practical level, and A and S were defined as good.
A: 80 to 100 grids remained
B: 50 to 79 grids remained
C: 0 to less than 50 remained.

### (5) Haze (transparency)

A laminated polyester film sample was allowed to stand under normal conditions (23°C, relative humidity 50%) for 40 hours, then haze was measured using a turbidity meter "NDH5000" manufactured by Nippon Denshoku Industries Co., Ltd., according to JIS K7136 "Determination of haze for transparent materials" (2000 version). The measurement was performed by irradiating light from a face side of the sample on which the resin layer was laminated. As the sample, 10 square samples each having a side of 50 mm were prepared, the measurement was performed once for each sample, and the average value obtained by measuring 10 times in total was defined as a haze value of the sample.

In addition, transparency was evaluated on a 4-point scale, based on the haze value. C was a practically problematic level, B was a practical level, and A was defined as good.
A: 1.5% or less
B: More than 1.5% and 3.0% or less
C: More than 3.0%.

### (6) Interference unevenness

A black gloss tape (manufactured by Yamato Co., Ltd., vinyl tape No. 200-50-21: black) was laminated on a surface opposite to the layer (X) of the laminated polyester film so as not to entrap air bubbles.

This sample was placed in a dark room 30 cm directly under a three-wavelength fluorescent lamp (manufactured by Panasonic Corporation, three-wavelength neutral white (F·L 15EX-N 15W)), and the degree of interference unevenness was visually observed while changing viewing angle, then the following evaluation was performed. B and above were defined as good.

A: Almost no interference unevenness is seen
B: Interference unevenness is slightly seen
C: Interference unevenness is strong.

### (7) Structure confirmation of layer (X)

The method for confirming whether the layer (X) has a urethane bond or an ether bond is not particularly limited to a specific method, but the following method can be exemplified. For example, the presence or absence of weight peaks derived from structures is confirmed by gas chromatograph mass spectrometry (GC-MS). Next, the presence or absence of peaks derived from bonds between atoms in the structures is confirmed by Fourier transform infrared spectroscopy (FT-IR). Further, positions of chemical shifts derived from the positions of hydrogen atoms in the structures and proton-absorption line area derived from the number of hydrogen atoms are confirmed by proton-nuclear magnetic resonance spectroscopy (¹H-NMR). A method of collectively confirming these results is preferable.

### <Reference Examples>

### <Reference Example 1> Emulsion (EM-1) Containing Composition (AD-1) Having Acrylic Resin (D) on Surface of Metal Oxide Particles (A)

Into a usual acrylic resin reaction vessel equipped with a stirrer, a thermometer, and a reflux condenser was charged 100 parts by weight of isopropyl alcohol as a solvent, heated and stirred, and kept at 100°C.

Into this reaction vessel was added dropwise over 3 hours a mixture of 40 parts by weight of n = 19 eicosyl methacrylate as (meth)acrylate (d'-1), 40 parts by weight of isobornyl methacrylate having two rings as (meth)acrylate (d'-2), and 20 parts by weight of 2-hydroxyethyl acrylate as (meth)acrylate (d'-3) having other hydroxyl group. Then, after completion of the dropping, the mixture was heated at 100°C for 1 hour, and next, an additional catalyst mixed liquid consisting of 1 part by weight of t-butylperoxy 2-ethylhexanoate was charged. Subsequently, the mixture was heated at 100°C for 3 hours and then cooled to obtain an acrylic resin (D-1).

Using particles having an Al element "NanoTek" Al₂O₃ slurry (manufactured by C.I.Kasei Co., Ltd. number average particle diameter 30 nm) as the metal oxide particles (A), the "NanoTek" Al₂O₃ slurry and the acrylic resin (D-1) were sequentially added to a water-based solvent and dispersed by the following method to obtain an emulsion (EM-1) containing a mixed composition (AD-1) of the metal oxide particles (A) and the acrylic resin (D-1). (The method of (ii) above.)

The addition amount ratio (weight ratio) (A)/(D-1) of the metal oxide particles (A) and the acrylic resin (D-1) was set to 25/20 (the weight ratio was obtained by rounding off at the first decimal place). The dispersion treatment was performed by using a homomixer and rotating at a peripheral speed of 10 m/s for 5 hours. Moreover, the weight ratio (A)/(D-1) of the metal oxide particles (A) and the acrylic resin (D) in the finally obtained composition (AD-1) was 25/20 (the weight ratio was obtained by rounding off at the first decimal place).

The obtained composition (AD-1) was subjected to centrifugation by Hitachi desktop ultracentrifuge (CS150NX manufactured by Hitachi Koki Co., Ltd.) (rotation speed 3000 rpm, separation time 30 minutes), the metal oxide particles (A) (and the acrylic resin (D-1) adsorbed on the surface of the metal oxide particles (A)) were precipitated, then a supernatant liquid was removed, and a precipitate was concentrated to dryness. As a result of analyzing the concentrated and dried precipitate by X-ray photoelectron spectroscopy (XPS), it was confirmed that the acrylic resin (D-1) was present on the surface of the metal oxide particles (A). That is, it was found that the acrylic resin (D-1) was adsorbed and adhered to the surface of the metal oxide particles (A), and the obtained composition (AD-1) corresponds to particles having the acrylic resin (D-1) on the surface of the metal oxide particles (A).

### <Reference Example 2> Emulsion (EM-2) Containing Composition (AD-2) Having Acrylic Resin (D) on Surface of Metal Oxide Particles (A)

An emulsion (EM-2) containing a mixed composition (AD-2) of the particles (A) and the acrylic resin (D) was obtained by the same method as in Reference Example 1, except for using "NanoTek" TiO₂ slurry containing Ti element (manufactured by C.I. Kasei Co., Ltd. number average particle diameter 36 nm as the metal oxide particles (A).

### <Reference Example 3> Emulsion (EM-3) Containing Composition (AD-3) Having Acrylic Resin (D) on Surface of Metal Oxide Particles (A)

An emulsion (EM-3) containing a mixed composition (AD-3) of the particles (A) and the acrylic resin (D) was obtained by the same method as in Reference Example 1, except for using "NanoUse (registered trademark)" ZR containing Zr element (manufactured by Nissan Chemical Corporation number average particle diameter 90 nm) as the metal oxide particles (A).

### <Reference Example 4> Emulsion (EM-4) Containing Composition (AD-4) Having Acrylic Resin (D) on Surface of Metal Oxide Particles (A)

An emulsion (EM-4) containing a mixed composition (AD-4) of the particles (A) and the acrylic resin (D) was obtained by the same method as in Reference Example 1, except for using "SNOWTEX (registered trademark)" OL colloidal silica slurry (manufactured by Nissan Chemical Corporation number average particle diameter 40 nm) containing Si element as the metal oxide particles (A).

### <Reference Example 5> Emulsion (EM-5) Containing Composition (AD-5) Having Acrylic Resin (D) on Surface of Metal Oxide Particles (A)

An emulsion (EM-5) containing a mixed composition (AD-5) of the particles (A) and the acrylic resin (D) was obtained by the same method as in Reference Example 1, except that the addition amount ratio (weight ratio) (A)/(D) of the metal oxide particles (A) and the acrylic resin (D) was set to 14/20 (the weight ratio was obtained by rounding off at the first decimal place).

### <Reference Example 6> Emulsion (EM-6) Containing Composition (AD-6) Having Acrylic Resin (D) on Surface of Metal Oxide Particles (A)

An emulsion (EM-6) containing a mixed composition (AD-6) of the particles (A) and the acrylic resin (D) was obtained by the same method as in Reference Example 1, except that the addition amount ratio (weight ratio) (A)/(D) of the metal oxide particles (A) and the acrylic resin (D) was set to 15/20 (the weight ratio was obtained by rounding off at the first decimal place).

### <Reference Example 7> Emulsion (EM-7) Containing Composition (AD-7) Having Acrylic Resin (D) on Surface of Metal Oxide Particles (A)

An emulsion (EM-7) containing a mixed composition (AD-7) of the particles (A) and the acrylic resin (D) was obtained by the same method as in Reference Example 1, except that the addition amount ratio (weight ratio) (A)/(D) of the metal oxide particles (A) and the acrylic resin (D) was set to 50/10 (the weight ratio was obtained by rounding off at the first decimal place).

### <Reference Example 8> Emulsion (EM-8) Containing Composition (AD-8) Having Acrylic Resin (D) on Surface of Metal Oxide Particles (A)

An emulsion (EM-8) containing a mixed composition (AD-8) of the particles (A) and the acrylic resin (D) was obtained by the same method as in Reference Example 1, except that the addition amount ratio (weight ratio) (A)/(D) of the metal oxide particles (A) and the acrylic resin (D) was set to 51/10 (the weight ratio was obtained by rounding off at the first decimal place).

### <Reference Example 9> Emulsion (EM-9) Containing Composition (AD-9) Having Acrylic Resin (D) on Surface of Metal Oxide Particles (A)

An emulsion (EM-9) containing a mixed composition (AD-9) of the particles (A) and the acrylic resin (D) was obtained by the same method as in Reference Example 1, except that the addition amount ratio (weight ratio) (A)/(D) of the metal oxide particles (A) and the acrylic resin (D) was set to 25/45 (the weight ratio was obtained by rounding off at the first decimal place).

### <Reference Example 10> Emulsion (EM-10) Containing Composition (AD-10) Having Acrylic Resin (D) on Surface of Metal Oxide Particles (A)

An emulsion (EM-10) containing a mixed composition (AD-10) of the particles (A) and the acrylic resin (D) was obtained by the same method as in Reference Example 1, except that the addition amount ratio (weight ratio) (A)/(D) of the metal oxide particles (A) and the acrylic resin (D) was set to 35/20 (the weight ratio was obtained by rounding off at the first decimal place).

### <Reference Example 11> Emulsion (EM-11) Containing Composition (AD-11) Having Acrylic Resin (D) on Surface of Metal Oxide Particles (A)

An emulsion (EM-11) containing a mixed composition (AD-11) of the particles (A) and the acrylic resin (D) was obtained by the same method as in Reference Example 1, except that the addition amount ratio (weight ratio) (A)/(D) of the metal oxide particles (A) and the acrylic resin (D) was set to 56/10 (the weight ratio was obtained by rounding off at the first decimal place).

### <Reference Example 12> Emulsion (EM-12) Containing Composition (AD-12) Having Acrylic Resin (D) on Surface of Metal Oxide Particles (A)

An emulsion (EM-12) containing a mixed composition (AD-12) of the particles (A) and the acrylic resin (D) was obtained by the same method as in Reference Example 1, except that the addition amount ratio (weight ratio) (A)/(D) of the metal oxide particles (A) and the acrylic resin (D) was set to 8/20 (the weight ratio was obtained by rounding off at the first decimal place).

### <Reference Example 13> Emulsion (EM-13) Containing Composition (AD-13) Having Acrylic Resin (D) on Surface of Metal Oxide Particles (A)

An emulsion (EM-13) containing a mixed composition (AD-13) of the particles (A) and the acrylic resin (D) was obtained by the same method as in Reference Example 1, except that the addition amount ratio (weight ratio) (A)/(D) of the metal oxide particles (A) and the acrylic resin (D) was set to 19/35 (the weight ratio was obtained by rounding off at the first decimal place).

### <Reference Example 14> Emulsion (EM-14) Containing Composition (AD-14) Having Acrylic Resin (D) on Surface of Metal Oxide Particles (A)

An emulsion (EM-14) containing a mixed composition (AD-14) of the particles (A) and the acrylic resin (D) was obtained by the same method as in Reference Example 1, except that the addition amount ratio (weight ratio) (A)/(D) of the metal oxide particles (A) and the acrylic resin (D) was set to 32/3 (the weight ratio was obtained by rounding off at the first decimal place).

### EXAMPLES

Properties and the like of the laminated polyester films obtained in the following examples and comparative examples are shown in tables.

### <Example 1>

First, a coating agent composition 1 was prepared as follows.

### <Coating agent composition>

The following emulsion was mixed with an aqueous solvent at a ratio shown in the table to obtain a coating agent composition 1.

· Mixed composition (AD-1) of metal oxide particles (A) and acrylic resin (D): 45 parts by weight
· Urethane resin ("HYDRAN" (registered trademark) AP-40N manufactured by DIC CORPORATION) (urethane resin without ether component): 35 parts by weight
· Melamine compound ("BECKAMINE" (registered trademark) APM manufactured by DIC CORPORATION): 20 parts by weight

### <Laminated Polyester Film>

Subsequently, PET pellets (intrinsic viscosity 0.63 dl/g) that do not substantially contain particles were sufficiently vacuum dried, then supplied to an extruder and melted at 285°C, extruded into a sheet from a T-shaped die, and wound around a mirror-casting drum with a surface temperature of 25°C using a static electricity applying casting method, and cooled and solidified. This unstretched film was heated to 90°C and stretched 3.4 times in the longitudinal direction to obtain a uniaxially stretched film (film B).

Next, the coating agent composition 1 was applied to a corona discharge treated surface of the uniaxially stretched film using bar coating. The both ends in the width direction of the uniaxially stretched film coated with the coating agent composition were gripped with clips and led to a preheating zone, and the atmospheric temperature was set to 75°C, followed by setting to 110°C using a radiation heater, and then setting to 90°C to dry the coating agent composition, thereby forming a resin layer. Subsequently, the resulting film was continuously stretched 3.5 times in the width direction in a heating zone (stretching zone) of 120°C, and then heat treated in a heat treatment zone (heat setting zone) of 230°C for 20 seconds to obtain a laminated polyester film in which crystal orientation was completed. In the obtained laminated polyester film, the PET film had a thickness of 50 um and the resin layer had a thickness of 700 nm. Properties and the like of the obtained laminated polyester film are shown in the tables. It was excellent in transparency, scratch resistance, workability, metal adhesion, and interference unevenness.

### <Example 2>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-2) of metal oxide particles (A) and acrylic resin (D): 45 parts by weight
· Urethane resin ("HYDRAN" (registered trademark) AP-40N manufactured by DIC CORPORATION) (urethane resin without ether component): 35 parts by weight
· Melamine compound ("BECKAMINE" (registered trademark) APM manufactured by DIC CORPORATION): 20 parts by weight.

### <Example 3>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-3) of metal oxide particles (A) and acrylic resin (D): 45 parts by weight
· Urethane resin ("HYDRAN" (registered trademark)" AP-40N manufactured by DIC CORPORATION) (urethane resin without ether component): 35 parts by weight
· Melamine compound ("BECKAMINE" (registered trademark) APM manufactured by DIC CORPORATION): 20 parts by weight.

### <Example 4>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-4) of metal oxide particles (A) and acrylic resin (D): 45 parts by weight
· Urethane resin ("HYDRAN" (registered trademark) AP-40N manufactured by DIC CORPORATION) (urethane resin without ether component): 35 parts by weight
· Melamine compound ("BECKAMINE" (registered trademark) APM manufactured by DIC CORPORATION): 20 parts by weight.

### <Example 5>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-1) of metal oxide particles (A) and acrylic resin (D): 45 parts by weight
· Urethane resin ("HYDRAN" (registered trademark) WLS210 manufactured by DIC CORPORATION) (urethane resin with ether component): 35 parts by weight
· Melamine compound ("BECKAMINE" (registered trademark) APM manufactured by DIC CORPORATION): 20 parts by weight.

### <Example 6>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-1) of metal oxide particles (A) and acrylic resin (D): 45 parts by weight
· Urethane resin ("HYDRAN" (registered trademark) WLS210 manufactured by DIC CORPORATION) (urethane resin with ether component): 35 parts by weight
· Oxazoline compound ("Epocros" (registered trademark) WS500 manufactured by Nippon Shokubai Co., Ltd.): 20 parts by weight.

### <Example 7>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-1) of metal oxide particles (A) and acrylic resin (D): 45 parts by weight
· Urethane resin ("HYDRAN" (registered trademark) WLS210 manufactured by DIC CORPORATION) (urethane resin with ether component): 35 parts by weight
· Carbodiimide compound ("Carbodilite" (registered trademark) V-04B manufactured by Nisshinbo Chemical Inc.): 20 parts by weight.

### <Example 8>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-1) of metal oxide particles (A) and acrylic resin (D): 45 parts by weight
· Urethane resin ("HYDRAN" (registered trademark) WLS210 manufactured by DIC CORPORATION) (urethane resin with ether component): 35 parts by weight
· Epoxy compound (EM-520 manufactured by ADEKA CORPORATION): 20 parts by weight.

### <Example 9>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-10) of metal oxide particles (A) and acrylic resin (D): 55 parts by weight
· Urethane resin ("HYDRAN" (registered trademark) WLS210 manufactured by DIC CORPORATION) (urethane resin with ether component): 45 parts by weight.

### <Example 10>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-5) of metal oxide particles (A) and acrylic resin (D): 34 parts by weight
· Urethane resin ("HYDRAN" (registered trademark) AP40N manufactured by DIC CORPORATION) (urethane resin without ether component): 46 parts by weight
· Melamine compound ("BECKAMINE" (registered trademark) APM manufactured by DIC CORPORATION): 20 parts by weight.

### <Example 11>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-6) of metal oxide particles (A) and acrylic resin (D): 35 parts by weight
· Urethane resin ("HYDRAN" (registered trademark) AP40N manufactured by DIC CORPORATION) (urethane resin without ether component): 45 parts by weight
· Melamine compound ("BECKAMINE" (registered trademark) APM manufactured by DIC CORPORATION): 20 parts by weight.

### <Example 12>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-7) of metal oxide particles (A) and acrylic resin (D): 60 parts by weight
· Urethane resin ("HYDRAN" (registered trademark) AP40N manufactured by DIC CORPORATION) (urethane resin without ether component): 20 parts by weight
· Melamine compound ("BECKAMINE" (registered trademark) APM manufactured by DIC CORPORATION): 20 parts by weight.

### <Example 13>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-8) of metal oxide particles (A) and acrylic resin (D): 61 parts by weight
· Urethane resin ("HYDRAN" (registered trademark) AP40N manufactured by DIC CORPORATION) (urethane resin without ether component): 19 parts by weight
· Melamine compound ("BECKAMINE" (registered trademark) APM manufactured by DIC CORPORATION): 20 parts by weight.

### <Example 14>

A laminated polyester film was obtained by the same method as in Example 1, except that the coating agent composition in the coating liquid was changed as follows. Properties and the like of the obtained laminated polyester film are shown in the tables.

### <Coating agent composition>

- "NanoTek" Al₂O₃ slurry (manufactured by C.I.Kasei Co., Ltd.): 25 parts by weight
- Urethane resin ("HYDRAN" (registered trademark) AP40N manufactured by DIC CORPORATION) (urethane resin without ether component): 45 parts by weight
- Melamine compound ("BECKAMINE" (registered trademark) APM manufactured by DIC CORPORATION): 30 parts by weight.

### <Example 15>

A coating agent similar to the coating material composition of Example 5 was used to obtain a laminated polyester film by the following method. As a base material, PET film "Lumirror T60" (base material thickness 50 um) manufactured by Toray Industries, Inc. was used. The coating material composition was applied to the base material using a wire bar, and then heated and cured in a hot air oven at 180°C for 1 min. In the obtained laminated polyester film, the PET film had a thickness of 50 µm and the resin layer had a thickness of 700 nm. Properties and the like of the obtained laminated polyester film are shown in the tables.

### <Example 16>

A laminated polyester film was obtained by the same method as in Example 1, except that the coating agent composition in the coating liquid was changed as follows. Properties and the like of the obtained laminated polyester film are shown in the tables.
· Mixed composition (AD-11) of metal oxide particles (A) and acrylic resin (D): 66 parts by weight
· Urethane resin ("HYDRAN" (registered trademark) AP40N manufactured by DIC CORPORATION) (urethane resin without ether component): 14 parts by weight
· Melamine compound ("BECKAMINE" (registered trademark) APM manufactured by DIC CORPORATION): 20 parts by weight.

### <Example 17>

A laminated polyester film was obtained by the same method as in Example 1, except that the coating agent composition in the coating liquid was changed as follows. Properties and the like of the obtained laminated polyester film are shown in the tables.
· Mixed composition (AD-12) of metal oxide particles (A) and acrylic resin (D): 28 parts by weight
· Urethane resin ("HYDRAN" (registered trademark) AP40N manufactured by DIC CORPORATION) (urethane resin without ether component): 52 parts by weight
· Melamine compound ("BECKAMINE" (registered trademark) APM manufactured by DIC CORPORATION): 20 parts by weight.

### <Example 18>

A laminated polyester film was obtained by the same method as in Example 1, except that the coating agent composition in the coating liquid was changed as follows. Properties and the like of the obtained laminated polyester film are shown in the tables.
· Mixed composition (AD-13) of metal oxide particles (A) and acrylic resin (D): 54 parts by weight
· Urethane resin ("HYDRAN" (registered trademark) WLS210 manufactured by DIC CORPORATION) (urethane resin with ether component): 26 parts by weight
· Melamine compound ("BECKAMINE" (registered trademark) APM manufactured by DIC CORPORATION): 20 parts by weight.

### <Example 19>

A laminated polyester film was obtained by the same method as in Example 1, except that the coating agent composition in the coating liquid was changed as follows. Properties and the like of the obtained laminated polyester film are shown in the tables.
· Mixed composition (AD-14) of metal oxide particles (A) and acrylic resin (D): 35 parts by weight
· Urethane resin ("HYDRAN" (registered trademark) WLS210 manufactured by DIC CORPORATION) (urethane resin with ether component): 45 parts by weight
· Melamine compound ("BECKAMINE" (registered trademark) APM manufactured by DIC CORPORATION): 20 parts by weight.

### <Comparative Example 1>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-1) of metal oxide particles (A) and acrylic resin (D): 45 parts by weight
· Urethane resin ("HYDRAN" (registered trademark) AP30F manufactured by DIC CORPORATION): 35 parts by weight
· Melamine compound ("BECKAMINE" (registered trademark) APM manufactured by DIC CORPORATION): 20 parts by weight

### <Comparative Example 2>

A laminated polyester film was obtained by the same method as in Example 1, except that the coating agent composition in the coating liquid was changed as follows. Properties and the like of the obtained laminated polyester film are shown in the tables.

### <Coating agent composition>

· Acrylic particles ("Epostar" (registered trademark) MX030W manufactured by Nippon Shokubai Co., Ltd.: 25 parts by weight
· Urethane resin ("HYDRAN" (registered trademark) AP30F manufactured by DIC CORPORATION): 35 parts by weight
· Melamine compound ("BECKAMINE" (registered trademark) APM manufactured by DIC CORPORATION): 20 parts by weight
· Acrylic resin (D-1): 20 parts by weight.

### <Comparative Example 3>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-1) of metal oxide particles (A) and acrylic resin (D): 45 parts by weight
· Urethane resin ("HYDRAN" (registered trademark) AP201 manufactured by DIC CORPORATION): 35 parts by weight
· Melamine compound ("BECKAMINE" (registered trademark) APM manufactured by DIC CORPORATION): 20 parts by weight.

### <Comparative Example 4>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-1) of metal oxide particles (A) and acrylic resin (D): 45 parts by weight
· Urethane resin ("SUPERFLEX" (registered trademark) 210 manufactured by DKS Co. Ltd.): 35 parts by weight
· Melamine compound ("BECKAMINE" (registered trademark) APM manufactured by DIC CORPORATION): 20 parts by weight.

### <Comparative Example 5>

A laminated polyester film was obtained by the same method as in Example 1, except that the coating agent composition in the coating liquid was changed as follows. Properties and the like of the obtained laminated polyester film are shown in the tables.

### <Coating agent composition>

· Mixed composition (AD-9) of metal oxide particles (A) and acrylic resin (D): 70 parts by weight
· Melamine compound ("BECKAMINE" (registered trademark) APM manufactured by DIC CORPORATION): 30 parts by weight.

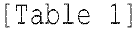

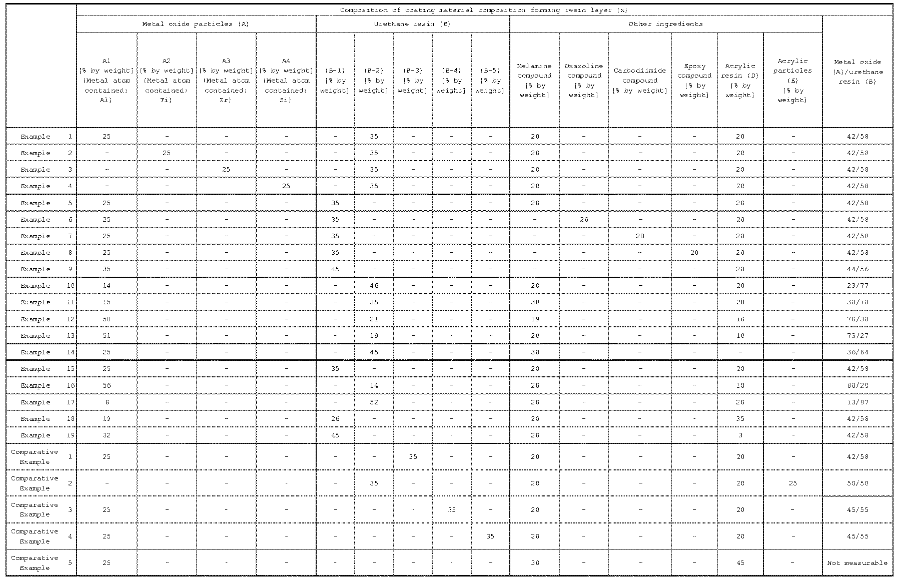

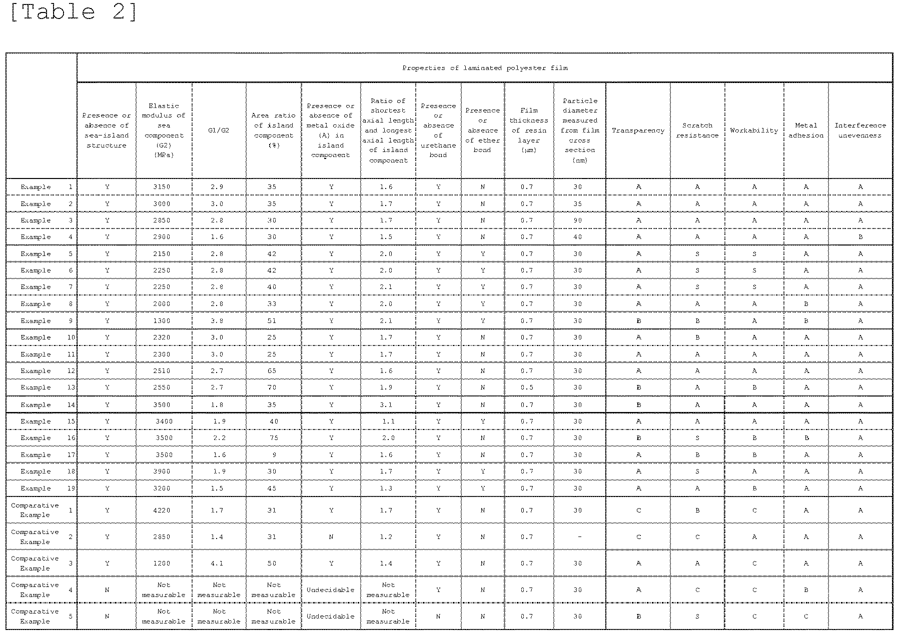

In the table, "Y" indicates "present" and "N" indicates "absent" in sections of Presence or absence of sea-island structure, Presence or absence of urethane bond, and Presence or absence of ether bond.

### INDUSTRIAL APPLICABILITY

The present invention is a laminated polyester film having excellent scratch resistance and workability, and further excellent adhesion to a metal layer, and can be used as a hard coat film conventionally used for display applications, a hard coat film used for molding and decorating applications, and a base for metal lamination.

## Claims

1. A laminated polyester film having a layer (X) on at least one surface of a polyester film, wherein the layer (X) is disposed on at least one surface layer, the layer (X) has a surface having a sea-island structure, the layer (X) has a sea component with an elastic modulus (G2) of 4,000 MPa or less, and a ratio (G1/G2) of an elastic modulus (G1) of an island component and the elastic modulus (G2) of the sea component is 1.5 to 4.0, wherein the elastic modulus (G1) of an island component and the elastic modulus (G2) of the sea component are measured according to the description.

2. The laminated polyester film according to claim 1, wherein the layer (X) contains metal oxide particles (A) containing at least one metal element selected from the group consisting of Si, Al, Ti, Zr, Se and Fe.

3. The laminated polyester film according to claim 2, wherein a content of the metal oxide particles (A) is 15 to 50% by weight based on an entire layer (X).

4. The laminated polyester film according to claim 2 or 3, wherein the island component of the layer (X) contains the metal oxide particles (A).

5. The laminated polyester film according to any one of claims 1 to 4, wherein a shape of the island component on the surface of the layer (X) has a ratio of a shortest axial length and a longest axial length of 1.5 or more.

6. The laminated polyester film according to any one of claims 1 to 5, wherein an area ratio of the island component on the surface of the layer (X) is 10 to 60%.

7. The laminated polyester film according to any one of claims 1 to 6, wherein the layer (X) contains a urethane component and an ether component.

8. The laminated polyester film according to any one of claims 1 to 7, wherein the layer (X) is a layer formed from a coating agent composition (x) containing the metal oxide particles (A) containing at least one metal element selected from the group consisting of Si, Al, Ti, Zr, Se and Fe and a urethane resin component (B), and a weight ratio ((a)/(b)) of the metal oxide particles (A) and the urethane resin component (B) in the coating agent composition (x) is 30/70 to 70/30.

9. The laminated polyester film according to claim 8, wherein the urethane resin component (B) is a urethane resin component (B) having an ether bond.

10. A method for producing the laminated polyester film according to any one of claims 1 to 9, comprising
applying a coating agent composition (x) to at least one side of a polyester film before crystal orientation is completed and then subjecting the polyester film to a stretching treatment in at least one direction and a heat treatment,
wherein the coating agent composition (x) contains metal oxide particles (A) and a urethane resin component (B) .

## Patentansprüche

1. Laminierte Polyesterfolie, die eine Schicht (X) an wenigstens einer Oberfläche einer Polyesterfolie aufweist, wobei die Schicht (X) an wenigstens einer Oberflächenschicht angeordnet ist, wobei die Schicht (X) eine Oberfläche mit einer Meer-Insel-Struktur aufweist, wobei die Schicht (X) eine Meerkomponente mit einem Elastizitätsmodul (G2) von 4.000 MPa oder weniger und ein Verhältnis (G1/G2) zwischen einem Elastizitätsmodul (G1) einer Inselkomponente und dem Elastizitätsmodul (G2) der Meerkomponente von 1,5 bis 4,0 aufweist, wobei das Elastizitätsmodul (G1) einer Inselkomponente und das Elastizitätsmodul (G2) der Meerkomponente gemäß der Beschreibung gemessen werden.

2. Laminierte Polyesterfolie nach Anspruch 1, wobei die Schicht (X) Metalloxidpartikel (A) enthält, die wenigstens ein Metallelement enthalten, das aus der Gruppe ausgewählt ist, die aus Si, Al, Ti, Zr, Se und Fe besteht.

3. Laminierte Polyesterfolie nach Anspruch 2, wobei der Anteil der Metalloxidpartikel (A) 15 bis 50 Gewichtsprozent basierend auf der gesamten Schicht (X) beträgt.

4. Laminierte Polyesterfolie nach Anspruch 2 oder 3, wobei die Inselkomponente der Schicht (X) die Metalloxidpartikel (A) enthält.

5. Laminierte Polyesterfolie nach einem der Ansprüche 1 bis 4, wobei die Form der Inselkomponente an der Oberfläche der Schicht (X) ein Verhältnis zwischen einer kürzesten Axiallänge und einer längsten Axiallänge von 1,5 oder mehr aufweist.

6. Laminierte Polyesterfolie nach einem der Ansprüche 1 bis 5, wobei das Flächenverhältnis der Inselkomponente an der Oberfläche der Schicht (X) 10 bis 60 % beträgt.

7. Laminierte Polyesterfolie nach einem der Ansprüche 1 bis 6, wobei die Schicht (X) eine Urethankomponente und eine Etherkomponente enthält.

8. Laminierte Polyesterfolie nach einem der Ansprüche 1 bis 7, wobei die Schicht (X) eine Schicht ist, die aus einer Beschichtungsmittelzusammensetzung (x) ausgebildet ist, die die Metalloxidpartikeln (A), die wenigstens ein Metallelement, das aus der Gruppe ausgewählt ist, die aus Si, Al, Ti, Zr, Se und Fe besteht, enthalten, und eine Urethanharzkomponente (B) enthält, wobei das Gewichtsverhältnis (a/b) zwischen den Metalloxidpartikeln (A) und der Urethanharzkomponente (B) in der Beschichtungsmittelzusammensetzung (x) zwischen 30/70 und 70/30 beträgt.

9. Laminierte Polyesterfolie nach Anspruch 8, wobei die Urethanharzkomponente (B) eine Urethanharzkomponente (B) mit einer Etherbindung ist.

10. Verfahren zum Erzeugen der laminierten Polyesterfolie gemäß den Ansprüchen 1 bis 9, aufweisend:
Auftragen einer Beschichtungsmittelzusammensetzung (x) auf wenigstens eine Seite einer Polyesterfolie, bevor eine Kristallausrichtung abgeschlossen ist, und dann Unterwerfen der Polyesterfolie an eine Dehnbehandlung in wenigstens einer Richtung und an eine Wärmebehandlung,
wobei die Beschichtungsmittelzusammensetzung (x) Metalloxidpartikeln (A) und eine Urethanharzkomponente (B) enthält.

## Revendications

1. Film de polyester stratifié comportant une couche (X) sur au moins une surface d'un film de polyester, dans lequel la couche (X) est disposée sur au moins une couche de surface, la couche (X) a une surface ayant une structure mer-île, la couche (X) a un composant mer ayant un module d'élasticité (G2) de 4 000 MPa ou moins, et un rapport (G1/G2) entre un module d'élasticité (G1) d'un composant île et le module d'élasticité (G2) du composant mer est de 1,5 à 4,0, le module d'élasticité (G1) d'un composant île et le module d'élasticité (G2) du composant mer étant mesurés conformément à la description.

2. Film de polyester stratifié selon la revendication 1, dans lequel la couche (X) contient des particules d'oxyde métallique (A) contenant au moins un élément métallique choisi dans le groupe constitué par Si, Al, Ti, Zr, Se et Fe.

3. Film de polyester stratifié selon la revendication 2, dans lequel la teneur en les particules d'oxyde métallique (A) est de 15 à 50 % en poids par rapport à l'ensemble de la couche (X).

4. Film de polyester stratifié selon la revendication 2 ou 3, dans lequel le composant île de la couche (X) contient les particules d'oxyde métallique (A).

5. Film de polyester stratifié selon l'une quelconque des revendications 1 à 4, dans lequel une forme du composant île sur la surface de la couche (X) présente un rapport entre une longueur axiale la plus courte et une longueur axiale la plus longue de 1,5 ou plus.

6. Film de polyester stratifié selon l'une quelconque des revendications 1 à 5, dans lequel un rapport d'aire du composant île sur la surface de la couche (X) est de 10 à 60 %.

7. Film de polyester stratifié selon l'une quelconque des revendications 1 à 6, dans lequel la couche (X) contient un composant uréthane et un composant éther.

8. Film de polyester stratifié selon l'une quelconque des revendications 1 à 7, dans lequel la couche (X) est une couche formée à partir d'une composition d'agent de revêtement (x) contenant les particules d'oxyde métallique (A) contenant au moins un élément métallique choisi dans le groupe constitué par Si, Al, Ti, Zr, Se et Fe et un composant résine d'uréthane (B), et un rapport en poids ((a)/(b)) entre les particules d'oxyde métallique (A) et le composant résine d'uréthane (B) dans la composition d'agent de revêtement (x) est de 30/70 à 70/30.

9. Film de polyester stratifié selon la revendication 8, dans lequel le composant résine d'uréthane (B) est un composant résine d'uréthane (B) ayant une liaison éther.

10. Procédé de production du film de polyester stratifié selon l'une quelconque des revendications 1 à 9, comprenant
l'application d'une composition d'agent de revêtement (x) sur au moins un côté d'un film de polyester avant que l'orientation des cristaux ne soit terminée, puis la soumission du film de polyester à un traitement d'étirage dans au moins une direction et à un traitement thermique,
la composition d'agent de revêtement (x) contenant des particules d'oxyde métallique (A) et un composant résine d'uréthane (B).
